# EUROPEAN PATENT APPLICATION

(11) **EP 4 603 363 A1**
(43) Date of publication of application: **20.08.2025**
(21) Application number: 23899873.6
(22) Date of filing: 30.11.2023
(51) Int. Cl.: B62B 5/00, B62B 3/02

(54) **ELECTRIC PULL CART AND ELECTRIC POWER-ASSISTED PULL CART**

(30) Priority: 08.12.2022 CN 202211569122; 24.11.2023 CN 202311586479; 24.11.2023 CN 202323191893 U; 24.11.2023 CN 202311581180; 24.11.2023 CN 202323182811 U
(71) Applicant: Nanjing Chervon Industry Co., Ltd., Nanjing, Jiangsu 211106 (CN)
(72) Inventor: XU, Zhongquan, Nanjing, Jiangsu 211106 (CN); SUN, Chenwei, Nanjing, Jiangsu 211106 (CN); XIAO, Minggui, Nanjing, Jiangsu 211106 (CN); XU, Yanqing, Nanjing, Jiangsu 211106 (CN); FU, Xiangqing, Nanjing, Jiangsu 211106 (CN); WANG, Yong, Nanjing, Jiangsu 211106 (CN)
(74) Representative: Sun, Yiming
(86) International application number: PCT/CN2023/135397
(87) International publication number: WO 2024/120294

(57) **Abstract**

Provided are an electric wagon and an electronically power assisted wagon. The electric wagon includes a wagon body including at least a foldable frame; a handle device connected to the wagon body; a walking assembly including at least driving wheels; a drive motor configured to drive the driving wheels to rotate; a power supply connection portion configured to be detachably connected to a battery pack for supplying power to the drive motor; and a controller electrically connected to at least the drive motor to control the drive motor to rotate.

## Description

This application claims priority to Chinese Patent Application No. 202211569122.3 filed with the China National Intellectual Property Administration (CNIPA) on Dec. 8, 2022, Chinese Patent Application No. 202311586479.7 filed with the CNIPA on Nov. 24, 2023, Chinese Patent Application No. 202323191893.6 filed with the CNIPA on Nov. 24, 2023, Chinese Patent Application No. 202311581180.2 filed with the CNIPAon Nov. 24, 2023, and Chinese Patent Application No. 202323182811.1 filed with the CNIPA on Nov. 24, 2023, the disclosures of which are incorporated herein by reference in their entireties.

### TECHNICAL FIELD

The present application relates to conveying vehicles, for example, an electric wagon and an electronically power assisted wagon.

### BACKGROUND

As the living standards are improved continuously, people increasingly regard various outdoor activities as the first choice for relaxation, such as outdoor picnics or camping. During the above activities, relatively many things are generally required to be carried, which are inconvenient to carry. To satisfy the requirement, wagons for outdoor picnics on the market are widely popular. However, outdoor playgrounds are generally different from smooth urban roads. When relatively heavy things are conveyed, the wagons are relatively laborious to push and pull.

This part provides background information related to the present application, and the background information is not necessarily the existing art.

### SUMMARY

An object of the present application is to solve or at least alleviate part or all of the preceding problems. The present application provides an electric wagon capable of providing electrical energy for assistance.

The present application adopts the technical solutions below.

An electric wagon includes a drive motor configured to drive driving wheels to rotate and a power supply connection portion configured to be detachably connected to a battery pack for supplying power to the drive motor.

In an example, the energy of the battery pack is greater than or equal to 40 Wh.

In an example, the electric wagon includes a wagon body including at least a frame; a handle device connected to the wagon body; and a walking assembly including at least the driving wheels.

In some examples, the frame is configured to be foldable.

In some examples, the electric wagon includes a controller electrically connected to at least the drive motor to control the drive motor to rotate.

In some examples, the power supply connection portion is provided with a coupling portion connected to the battery pack, and the coupling portion is basically the same as a coupling portion of a power tool adapted to the battery pack, where the coupling portion of the power tool is configured to be coupled to the battery pack.

In an example, the wagon body further includes an enclosure detachably connected to the foldable frame to form a storage space.

**In** an example, the power supply connection portion is disposed at the front end, rear end, or lower end of the storage space or on the left side or right side of the storage space.

In an example, the power supply connection portion is disposed on the handle device.

In an example, the frame is a rigid structural member, and the enclosure includes a flexible structural member.

In an example, the power supply connection portion includes at least two power interfaces arranged independently.

In an example, the at least two power interfaces arranged independently include at least a closed battery compartment.

**In** an example, the power supply connection portion further includes an outdoor power supply connection terminal configured to be connected to an external power supply device.

**In** an example, the electric wagon further includes a power output interface connectable to an external powered device to output electrical energy.

**In** an example, the power output interface is disposed on the handle device or at the front end or rear end of the storage space.

**In** an example, the electric wagon further includes a control board provided with at least the controller and disposed adjacent to the power supply connection portion.

**In** an example, the control board is provided with an energy recovery circuit; and the energy recovery circuit recovers electrical energy into the battery pack when the drive motor is decelerated.

**In** an example, the electric wagon further includes a parameter detection module configured to detect a walking state of the electric wagon.

**In** an example, the controller is configured to, when the walking state is a downhill state, control the energy recovery circuit to recover electrical energy.

**In** an example, the parameter detection module is further configured to detect a wagon parameter of the electric wagon; and the controller is configured to adjust an assistance state of the drive motor according to the wagon parameter.

**In** an example, the controller is configured to identify, according to the wagon parameter, an operation intention of a user operating the electric wagon and adjust the assistance state of the drive motor according to the operation intention.

**In** an example, the wagon parameter includes an operating parameter of the drive motor, a state parameter of the handle device relative to the wagon body, the magnitude and direction of a force applied by a user to the handle device, or a walking speed of the user.

**In** an example, the assistance state includes output torque of the drive motor or an output speed of the drive motor.

**In** an example, the electric wagon further includes a power display device disposed on the handle device or in an adjacent region around the power supply connection portion.

**In** an example, the electric wagon further includes a mode selection switch disposed on the handle device and electrically connected to at least the controller; and the controller is configured to control, according to a switch state of the mode selection switch, the drive motor to operate or not.

In an example, when the mode selection switch is in a first switch state, the drive motor does not operate; the mode selection switch in a second switch state has multiple switch gears; and the controller is configured to control, according to different switch gears, the drive motor to output power at corresponding output speeds or with corresponding output torque.

In an example, the electric wagon further includes a safety switch disposed on the handle device and electrically connected to at least the controller; and the controller is configured to, when the safety switch is turned on, not respond to a change in the switch state of the mode selection switch.

In an example, the ratio of the volume of the electric wagon when the frame is in a folded state to the volume of the electric wagon when the frame is in an unfolded state is greater than or equal to 0.1 and less than or equal to 0.6.

In an example, the drive motor is a hub motor.

In an example, the outer diameter of the hub motor is greater than or equal to 100 mm and less than or equal to 250 mm.

An electric wagon includes a drive motor configured to drive driving wheels to rotate and a power supply connection portion configured to be detachably connected to a battery pack for supplying power to the drive motor. The power supply connection portion is provided with a coupling portion connected to the battery pack, and the coupling portion is basically the same as a coupling portion of a power tool adapted to the battery pack, where the coupling portion of the power tool is configured to be coupled to the battery pack, so that after being detached from a wagon body, the battery pack is couplable to the power tool to supply power to the power tool.

**In** an example, the electric wagon further includes the wagon body including at least a foldable frame; a handle device connected to the wagon body; and a walking assembly including at least the driving wheels.

**In** an example, the battery pack is adaptable to the power tool to supply power to the power tool.

**In** an example, the drive motor is a hub motor.

**In** an example, the outer diameter of the hub motor is greater than or equal to 100 mm and less than or equal to 250 mm.

**In** an example, the wagon body further includes an enclosure detachably connected to the frame to form a storage space.

**In** an example, the battery pack is disposed at the front end, rear end, or lower end of the storage space or on the left side or right side of the storage space.

**In** an example, the frame is a rigid structural member, and the enclosure includes a flexible structural member.

**In** an example, the electric wagon further includes a parameter detection module configured to detect a wagon parameter of the electric wagon and a controller configured to adjust an assistance state of the drive motor according to the wagon parameter.

**In** an example, the controller is configured to identify, according to the wagon parameter, an operation intention of a user operating the electric wagon and adjust the assistance state of the drive motor according to the operation intention.

In an example, the wagon parameter includes an operating parameter of the drive motor, a state parameter of the handle device relative to the wagon body, the magnitude and direction of a force applied by a user to the handle device, or a walking speed of the user.

In an example, the assistance state includes output torque of the drive motor or an output speed of the drive motor.

An electronically power assisted wagon includes a controller electrically connected to at least a drive motor to control the drive motor to rotate. The electronically power assisted wagon includes an assistance mode. The controller is configured to, in the assistance mode, control an assistance state of the drive motor for driving wheels according to an operating force.

In an example, the electronically power assisted wagon further includes a parameter detection module configured to sense the operating force applied to a handle device.

In an example, the electronically power assisted wagon includes a wagon body including at least a foldable frame; the handle device connected to the wagon body; a walking assembly including at least the driving wheels; the drive motor configured to drive the driving wheels to rotate; and a power supply connection portion configured to be connected to a power supply for supplying power to the drive motor.

In an example, the parameter detection module is disposed on the handle device or at a connection between the handle device and the wagon body.

In an example, the electronically power assisted wagon further includes a control board provided with at least the controller, where the control board is provided with an energy recovery circuit.

**In** an example, the energy recovery circuit recovers electrical energy into a battery pack when the drive motor is decelerated.

**In** an example, the parameter detection module is further configured to detect a walking state of the electric wagon.

**In** an example, the controller is configured to, when the walking state is a downhill state, control the drive motor to change the assistance state to reduce the rotational speed of the drive motor.

**In** an example, the electronically power assisted wagon further includes a mode selection switch disposed on the handle device, electrically connected to at least the controller, and configured to control an operating mode of the electronically power assisted wagon.

**In** an example, when the mode selection switch is in an on state, the electronically power assisted wagon is in an assisted mode, and the controller is configured to control the drive motor to provide assistance; and when the mode selection switch is in an off state, the electronically power assisted wagon is in a non-assisted mode, and the controller is configured to control the drive motor to stop assistance.

**In** an example, when the mode selection switch is in a first switch state, the drive motor does not operate; the mode selection switch in a second switch state has multiple switch gears; and the controller is configured to control, according to different switch gears, the drive motor to output power at corresponding output speeds or with corresponding output torque.

**In** an example, the electronically power assisted wagon further includes a safety switch disposed on the handle device and electrically connected to at least the controller; and the controller is configured to, when the safety switch is turned on, not respond to a change in a switch state of the mode selection switch.

An electronically power assisted wagon includes a mode selection switch having at least a first switch state and a second switch state.

A controller is configured to control, according to a switch state of the mode selection switch, a drive motor to provide assistance or not.

**In** an example, the electronically power assisted wagon includes a wagon body including at least a foldable frame; a handle device connected to the wagon body; a walking assembly including at least driving wheels; the drive motor configured to drive the driving wheels to rotate; a power supply connection portion configured to be connected to a battery pack for supplying power to the drive motor; and the controller electrically connected to at least the drive motor to control the drive motor to rotate.

**In** an example, the wagon body further includes an enclosure detachably connected to the foldable frame to form a storage space.

**In** an example, the power supply connection portion is disposed at the front end, rear end, or lower end of the storage space or on the left side or right side of the storage space or disposed on the handle device.

**In** an example, the power supply connection portion is configured to be detachably connected to the battery pack or an external power supply device.

**In** an example, the power supply connection portion includes at least a closed battery compartment or an outdoor power supply connection terminal.

**In** an example, the drive motor is a hub motor.

**In** an example, the electronically power assisted wagon further includes a control board provided with at least the controller; the control board is provided with an energy recovery circuit; and the energy recovery circuit recovers electrical energy into the battery pack when the drive motor is decelerated.

**In** an example, the electronically power assisted wagon further includes a safety switch disposed on the handle device and electrically connected to at least the controller; and the controller is configured to, when the safety switch is turned on, not respond to a change in the switch state of the mode selection switch.

**In** an example, the electronically power assisted wagon further includes a parameter detection module configured to detect a wagon parameter of the electric wagon; and the controller is configured to adjust an assistance state of the drive motor according to the wagon parameter.

**In** an example, the controller is configured to identify, according to the wagon parameter, an operation intention of a user operating the electric wagon and adjust the assistance state of the drive motor according to the operation intention.

**In** an example, the wagon parameter includes an operating parameter of the drive motor, a state parameter of the handle device relative to the wagon body, the magnitude and direction of a force applied by a user to the handle device, or a walking speed of the user.

**In** an example, the assistance state includes output torque of the drive motor or an output speed of the drive motor.

An electronically power assisted wagon includes a parameter detection module configured to detect a wagon parameter of the electric wagon and a controller configured to adjust an assistance state of a drive motor according to the wagon parameter.

**In** an example, the electronically power assisted wagon includes a wagon body including at least a foldable frame; a handle device connected to the wagon body; a walking assembly including at least driving wheels; the drive motor configured to drive the driving wheels to rotate; a power supply connection portion configured to be connected to a battery pack for supplying power to the drive motor; and the controller electrically connected to at least the drive motor to control the drive motor to rotate.

**In** an example, the controller is configured to identify, according to the wagon parameter, an operation intention of a user operating the electric wagon and adjust the assistance state of the drive motor according to the operation intention.

**In** an example, the wagon parameter includes an operating parameter of the drive motor, a state parameter of the handle device relative to the wagon body, the magnitude and direction of a force applied by a user to the handle device, or a walking speed of the user.

**In** an example, the assistance state includes output torque of the drive motor or an output speed of the drive motor.

An electric wagon includes a drive motor integrated into driving wheels to drive the driving wheels to rotate and a power supply connection portion configured to be connected to a power supply for supplying power to the drive motor.

In an example, a wagon body includes at least a frame; a handle device is connected to the wagon body; and a walking assembly includes at least the driving wheels. The frame is configured to be foldable. The electric wagon further includes a controller electrically connected to at least the drive motor to control the drive motor to rotate.

In an example, the drive motor has a length greater than or equal to 100 mm and less than or equal to 250 mm along a radial direction of the driving wheels.

In an example, the ratio of the volume of the electric wagon when the frame is in a folded state to the volume of the electric wagon when the frame is in an unfolded state is greater than or equal to 0.1 and less than or equal to 0.6.

In an example, the handle device is configured to be foldable relative to the wagon body.

In an example, the electric wagon further includes a parameter detection module configured to detect a wagon parameter of the electric wagon; and the controller is configured to adjust an assistance state of the drive motor according to the wagon parameter.

In an example, the controller is configured to identify, according to the wagon parameter, an operation intention of a user operating the electric wagon and adjust the assistance state of the drive motor according to the operation intention.

In an example, the wagon parameter includes an operating parameter of the drive motor, a state parameter of the handle device relative to the wagon body, the magnitude and direction of a force applied by a user to the handle device, or a walking speed of the user.

In an example, the assistance state includes output torque of the drive motor or an output speed of the drive motor.

An electric wagon includes a drive motor integrated into driving wheels to drive the driving wheels to rotate. The rated output power of the drive motor is greater than or equal to 100 W and less than or equal to 800 W.

In an example, the electric wagon further includes a wagon body including at least a frame; a handle device connected to the wagon body; a walking assembly including at least the driving wheels; a power supply connection portion configured to be connected to a power supply for supplying power to the drive motor; and a controller electrically connected to at least the drive motor to control the drive motor to rotate.

In an example, the power supply connection portion includes at least two power interfaces arranged independently.

In an example, the at least two power interfaces arranged independently include at least a closed battery compartment.

In an example, the drive motor has a length greater than or equal to 100 mm and less than or equal to 250 mm along a radial direction of the driving wheels.

In an example, the frame is configured to be foldable.

In an example, the ratio of the volume of the electric wagon when the frame is in a folded state to the volume of the electric wagon when the frame is in an unfolded state is greater than or equal to 0.1 and less than or equal to 0.6.

In an example, the electric wagon further includes a parameter detection module configured to detect a wagon parameter of the electric wagon; and the controller is configured to adjust an assistance state of the drive motor according to the wagon parameter.

In an example, the controller is configured to identify, according to the wagon parameter, an operation intention of a user operating the electric wagon and adjust the assistance state of the drive motor according to the operation intention.

In an example, the wagon parameter includes an operating parameter of the drive motor, a state parameter of the handle device relative to the wagon body, the magnitude and direction of a force applied by a user to the handle device, or a walking speed of the user.

In an example, the assistance state includes output torque of the drive motor or an output speed of the drive motor.

An electric wagon includes a drive motor configured to drive driving wheels to rotate and a transmission mechanism configured to connect the drive motor to at least one of the driving wheels. The transmission mechanism includes a differential assembly configured to cause the driving wheels driven to rotate by the drive motor to travel at different speeds.

In an example, the electric wagon includes a wagon body including at least a foldable frame; a handle device connected to the wagon body; a walking assembly including at least the driving wheels; a power supply connection portion configured to be detachably connected to a battery pack for supplying power to the drive motor; and a controller electrically connected to at least the drive motor to control the drive motor to rotate.

In an example, the walking assembly further includes driven wheels disposed away from the drive motor.

**In** an example, the driving wheels are driven by the drive motor to rotate around a central axis, the drive motor is connected to the driving wheels via a coupling assembly, and an axis of the coupling assembly is eccentric relative to the central axis.

**In** an example, the driving wheels are configured to be a rear wheel group of the walking assembly, and the coupling assembly connects the driving wheels on left and right sides.

**In** an example, the transmission mechanism further includes a reduction assembly, and the reduction assembly includes at least one stage of gear reduction transmission.

**In** an example, reduction gears are provided on the coupling assembly, and gear structures meshing with the reduction gears are provided in the driving wheels.

**In** an example, the drive motor is connected to the differential assembly via at least one stage of gear reduction transmission in the reduction assembly.

**In** an example, the differential assembly is configured to cause the driving wheels to travel at different speeds during forward and reverse rotation of the driving wheels.

**In** an example, the electric wagon further includes a clutch mechanism, where when the clutch mechanism is in a first state, power transmission between the drive motor and the driving wheels is cut off.

**In** an example, the clutch mechanism is mechanically coupled to the drive motor and the driving wheels.

**In** an example, when the clutch mechanism is in a second state, the power transmission between the drive motor and the driving wheels is enabled, and the controller adjusts an assistance state of the drive motor according to a wagon parameter.

In an example, the electric wagon further includes a parameter detection module configured to detect the wagon parameter of the electric wagon; and the controller is configured to adjust the assistance state of the drive motor according to the wagon parameter.

In an example, the controller is configured to identify, according to the wagon parameter, an operation intention of a user operating the electric wagon and adjust the assistance state of the drive motor according to the operation intention.

In an example, the wagon parameter includes an operating parameter of the drive motor, a state parameter of the handle device relative to the wagon body, the magnitude and direction of a force applied by a user to the handle device, or a walking speed of the user.

In an example, the assistance state includes output torque of the drive motor or an output speed of the drive motor.

### BRIEF DESCRIPTION OF DRAWINGS

FIG. 1 is a structural view of an electric wagon in an unfolded state according to an example of the present application.
FIG. 2 is a structural view of an electric wagon in an unfolded state from another angle according to an example of the present application.
FIG. 3 is a structural view of an electric wagon with a wagon body in a folded state according to an example of the present application.
FIG. 4 is a structural view of a power supply connection portion and a battery pack according to an example of the present application.
FIG. 5 is a structural view of a battery pack and power tools to which the battery pack is applied according to an example of the present application.
FIG. 6 is a structural diagram of a control circuit of an electric wagon according to an example of the present application.
FIG. 7 is a structural view of a drive motor and a transmission mechanism of an electric wagon according to an example of the present application.
FIG. 8 is a structural view of FIG. 7 from another angle.
FIG. 9 is a sectional view of FIG. 8 taken along G-G.
FIG. 10 is a structural view of a clutch mechanism in a second state according to an example of the present application.
FIG. 11 is a structural view of a clutch mechanism in a first state according to an example of the present application.
FIG. 12 is a structural view of a semi-sectional view of FIG. 10.
FIG. 13 is a structural view of a handle device and driven wheels according to an example of the present application.
FIG. 14 is a partial structural view of FIG. 13 from another angle.
FIG. 15 is a structural view of a force direction detection portion and a connecting rod in FIG. 13.
FIG. 16 is a structural view of a grip in FIG. 13.
FIG. 17 is an exploded view of an angle detection portion in FIG. 13.
FIG. 18 is another structural view of a driving wheel and a drive motor.
FIG. 19 is a structural view of an electric wagon for a construction site according to an example of the present application.
FIG. 20 is a structural view of an electric wagon for a warehouse according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

**In** this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

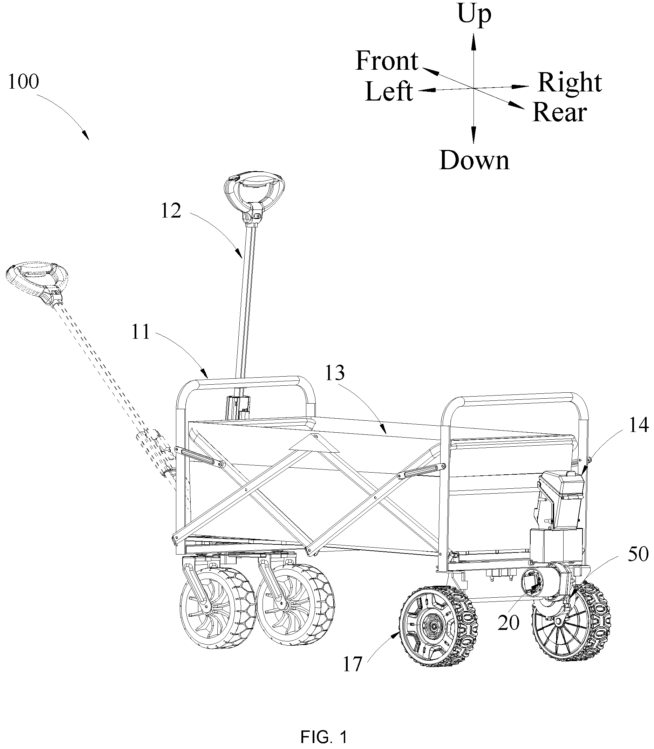

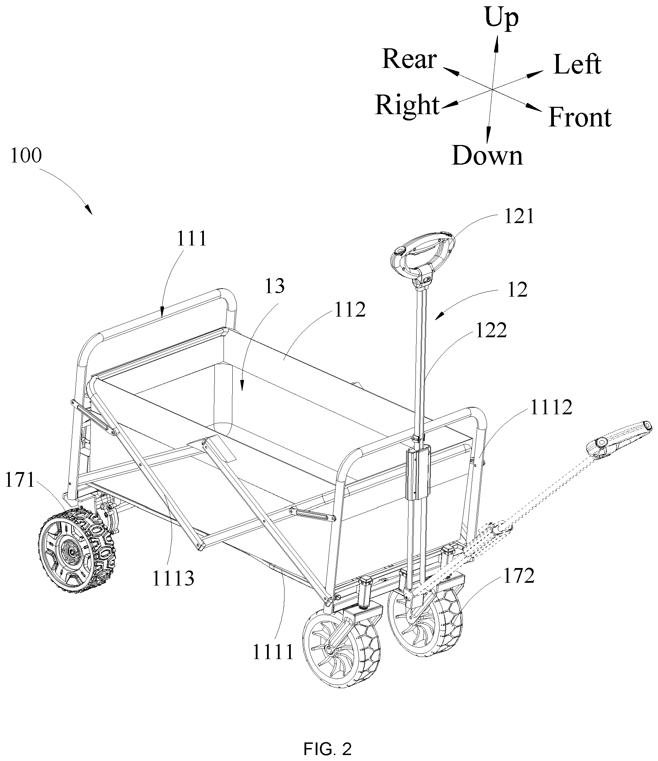

To clearly illustrate the technical solutions of the present application, an upper side, a lower side, a left side, a right side, a front side, and a rear side are defined, as shown in FIGS. 1 and 2.

An electric wagon 100 described in an example of the present application may be a wagon for outdoor camping of a family, a wagon for construction, a wagon for a warehouse, or a wagon used on another occasion.

The wagon for outdoor camping is used as an example for description below.

As shown in FIG. 1, the electric wagon 100 is an electric wagon for outdoor camping. In this example, the electric wagon 100 is mainly used by a user during outdoor camping or playing. The electric wagon 100 is used to convey tools for outdoor camping, such as a tent, a cooker, food, a lamp, tableware, an electric device, a table, and a support, and may even carry an infant or a child. Thus, the electric wagon 100 carries a relatively heavy weight. In this example, the electric wagon 100 may selectively walk with assistance by electric power so that a force applied by the user to the electric wagon 100 can be reduced, facilitating operations of the user. Therefore, the electric wagon 100 may also be understood as an electronically power assisted wagon.

In this example, a direction in which the user operates the electric wagon 100 is not limited. In some examples, the user operates the electric wagon 100 in a pulling manner, that is, the user is located in front of the electric wagon 100 in a traveling direction of the electric wagon 100, and the electric wagon 100 walks after the user. In some examples, the user operates the electric wagon 100 in a pushing manner, that is, the user is located behind the electric wagon 100 in the traveling direction of the electric wagon 100, the electric wagon 100 is in front of the user, and the user walks behind the electric wagon 100.

In some examples, an electric wagon 300 may be a wagon used on a construction site, and the electric wagon 300 may convey building materials, construction tools, construction equipment, etc. on the construction site.

In some examples, an electric wagon 400 may be a wagon used in a warehouse, and the electric wagon 400 may convey some shelves, goods, tools, equipment, etc..

In this example, as shown in FIGS. 1 to 4, the electric wagon 100 includes a wagon body 11, a handle device 12, a walking assembly 17, and a power supply connection portion 14. Spatial orientations in the following description are based on a coordinate system shown in FIGS. 1 and 2. In this example, the wagon body 11 includes a frame 111 and an enclosure 112 detachably connected to the frame 111. The handle device 12 includes a grip 121 and a connecting rod 122 connected between the grip 121 and the wagon body 11. The walking assembly 17 includes at least driving wheels 171 and driven wheels 172. In this example, at least one group among the driving wheels 171 and the driven wheels 172 adopts omni wheels. Optionally, at least one of the driving wheels 171 and the driven wheels 172 has a locking function to implement parking.

Optionally, the frame 111 is a rigid structural member and the enclosure 112 is a flexible structural member. For example, metal plates or metal rods are welded or hinged to form the frame 111, and the enclosure 112 may be made of tarpaulin, Oxford cloth, or another flexible material. In this example, the frame 111 includes a bottom portion 1111, end portions 1112, and side portions 1113. The bottom portion 1111 serves as a main bearing portion. The end portions 1112 are disposed at two ends in a front and rear direction. The side portions 1113 are disposed on two sides in a left and right direction, and the side portions 1113 on the left and right sides are separately connected to the end portions 1112. The end portions 1112 and the side portions 1113 form a frame structure basically surrounding the periphery of the bottom portion 1111. In some examples, the end portions 1112 and the side portions 1113 are each formed by connected components with the same structures or an integrally formed component.

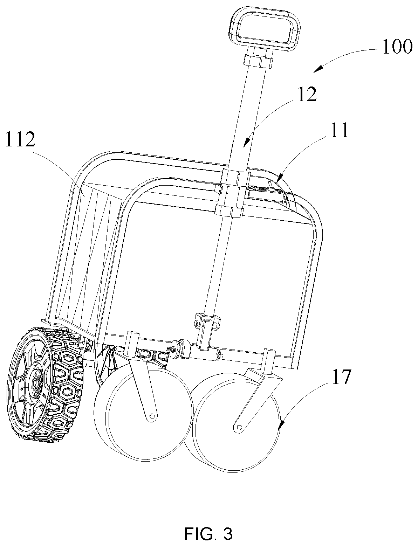

In this example, the frame 111 is a detachable or foldable frame. For example, as shown in FIG. 3, the foldable frame can be folded by gathering towards the middle of the frame or towards any side or any surface of the frame. In an example, the foldable frame 111 and the enclosure 112 can together form a three-dimensional storage space 13 or conveying space. Generally, the storage space 13 may be a cuboid space with an upper opening. In other examples, the storage space 13 may be a three-dimensional space in another shape. In some examples, the storage space 13 may be a three-dimensional space that can be closed. As shown in FIGS. 1 and 2, the frame 111 has an unfolded state. As shown in FIG. 3, the frame 111 has a folded state. When the frame 111 is in the folded state, the electric wagon 100 occupies a relatively small space and is convenient to store. When the frame 111 is in the unfolded state, the storage space 13 formed by the wagon body 11 of the electric wagon 100 becomes larger, making it convenient for the user to convey more things. It is to be interpreted that FIG. 3 shows the folded state of the frame 111, which is not necessarily a stored state of the electric wagon 100. In some examples, the electric wagon 100 has a smaller volume in the stored state. For example, the walking assembly 17 and the handle device 12 are separately folded and stored.

The handle device 12 is mounted at an end of the storage space 13. In this example, the handle device 12 is disposed at the front end of the storage space 13, and the handle device 12 is rotatably connected to the wagon body 11. As shown in FIGS. 1 and 2, the angle between the handle device 12 and the wagon body 11 is greater than or equal to 70°. In this example, the angle between the handle device 12 and the bottom portion 1111 is greater than or equal to 70°. When the angle between the handle device 12 and the wagon body 11 is greater than or equal to 70° and less than or equal to 90°, as shown by solid lines in FIG. 1, the electric wagon 100 may be in a pushed state. When the angle between the handle device 12 and the wagon body 11 is greater than 90°, as shown by dashed lines, the electric wagon 100 may be in a pulled or dragged state.

In an example, the connecting rod 122 of the handle device 12 includes a telescopic rod or a foldable rod. When the frame 111 is in the folded state, the handle device 12 may be retracted, thereby greatly reducing the volume of the electric wagon 100 in storage. In an example, the ratio of the volume of the electric wagon 100 when the frame 111 is in the folded state to the volume of the electric wagon 100 when the frame 111 is in the unfolded state is greater than or equal to 0.1 and less than or equal to 0.6. For example, the ratio may be 0.1, 0.2, 0.3, 0.4, 0.5, or 0.6.

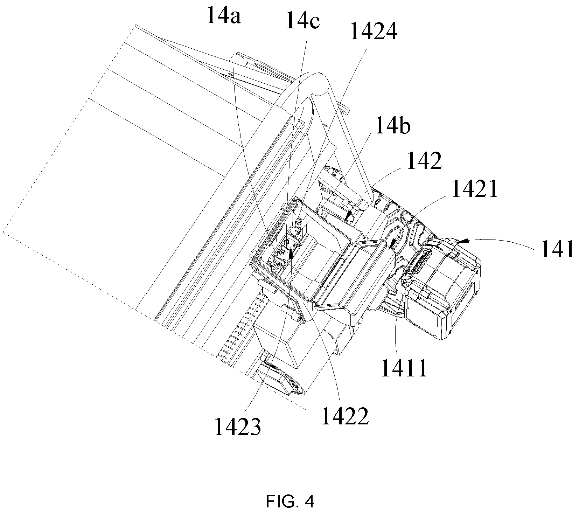

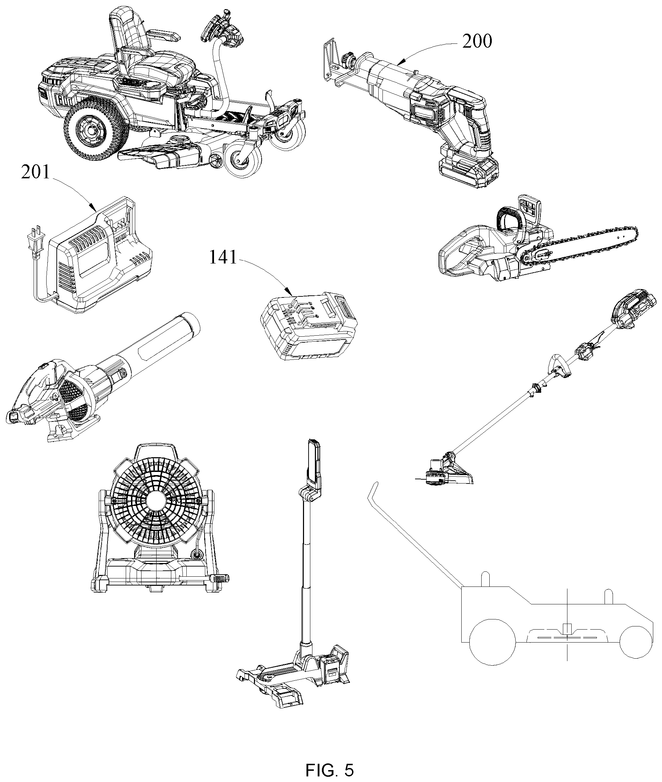

In an example, as shown in FIGS. 4 and 5, the power supply connection portion 14 is configured to be connected to a power supply. Optionally, the power supply connection portion 14 is configured to be detachably connected to a battery pack 141. Optionally, the power supply connection portion 14 is configured to be connected to an external power supply device. The external power supply device may be an outdoor power bank capable of outputting a direct current or an alternating current, and the outdoor power bank has multiple different output interfaces to serve as a power discharge station to satisfy different requirements of users.

As shown in FIG. 5, the battery pack 141 may be adapted to other types of power tools 200, for example, handheld power tools such as a drill, a hedge trimmer, a screwdriver, and a nail gun; table tools such as a table saw and a miter saw; hand-push power tools such as a push mower and a push snow thrower; riding power tools such as a riding mower, a riding vehicle, and an all-terrain vehicle; or robotic tools such as a mowing robot and a snow throwing robot. In some examples, the power tools to which the battery pack 141 can be adapted may be garden tools such as a hedge trimmer, a blower, a mower, and a chainsaw. In some examples, the power tools to which the battery pack 141 can be adapted may be vegetation care tools such as a string trimmer. Alternatively, the power tools may be sawing tools such as a reciprocating saw, a jigsaw, and a circular saw. Alternatively, the power tools may be grinding tools such as an angle grinder and a sander. Alternatively, the power tools may be other tools such as a lamp and a fan. Thus, when the battery pack 141 of the electric wagon 100 has insufficient power, the electric wagon 100 may be continuously powered by a battery pack of the power tool. Alternatively, when the power tool has insufficient power, the power tool may be powered by the battery pack of the electric wagon 100. Alternatively, the battery pack 141 of the electric wagon 100 may be charged by a charger 201 of a power tool 200. Thus, the applicability and the battery life of the electric wagon 100 are improved. In this manner, when the user works in a garden or by using the power tool 200, the user may use the electric wagon 100 to convey the power tool 200, a workpiece, or the like.

In this example, the power supply connection portion 14 may include at least a positive electrode connection terminal 14a and a negative electrode connection terminal 14b, which can be docked with positive and negative electrodes of the battery pack 141. In some examples, the power supply connection portion 14 may further include a communicative connection terminal 14c, and the communicative connection terminal 14c is connected to a communication terminal of the battery pack 141 to communicate with the battery pack 141.

In some examples, the power supply connection portion 14 may be disposed on the handle device 12 or at the front end, rear end, or lower end of the storage space 13. In some examples, the power supply connection portion 14 may include a battery compartment 142 for accommodating the battery pack 141, and the battery compartment 142 may be a closed battery compartment. The positive electrode connection terminal 14a and the negative electrode connection terminal 14b, which are docked with electrical terminals of the battery pack 141, are disposed in the battery compartment 142. Optionally, the positive electrode connection terminal 14a, the negative electrode connection terminal 14b, and the communicative connection terminal 14c, which are docked with electrical terminals of the battery pack 141, are disposed in the battery compartment 142. In this example, the battery compartment 142 may include a battery compartment cover 1421 and a battery compartment body 1422. After the battery pack 141 is mounted into the battery compartment body 1422, the battery compartment cover 1421 is covered so that a basically closed battery compartment 142 can be obtained to implement dust and water prevention functions.

In this example, the battery pack 141 is pluggably connected to the power supply connection portion 14. For example, a coupling portion 1423 connected to the battery pack 141 is disposed in the battery compartment 142, the coupling portion 1423 is formed with a first guide rail 1424, and the battery pack 141 is provided with a second guide rail 1411 that can be matched with the first guide rail 1424 to enable the battery pack 141 to slide along the first guide rail 1424. The coupling portion 1423 in the battery compartment 142 has basically the same structure as a coupling portion formed on the power tool and configured to be connected to the battery pack 141.

The battery compartment 142 is further provided with a locking structure and an ejection structure. The locking structure is configured to lock the battery pack in the battery compartment 142 to prevent the battery pack 141 from shaking, ensuring an electrical connection between the battery pack 141 and a power interface. The ejection structure is configured to eject the battery pack 141 when the locking structure releases the battery pack 141, making it convenient for the user to detach the battery pack. The working principles and structures of mechanical locking and ejection of the battery pack have been fully disclosed to those skilled in the art and thus are not described in detail here for brevity of the description.

In an example, the power supply connection portion 14 may include an outdoor power supply connection terminal connectable to an outdoor power supply device. For example, the outdoor power supply connection terminal may be an electrical interface similar to an interface on a power strip. The electric wagon 100 can be electrically connected to the external power supply device through a power cord. In an example, the outdoor power supply connection terminal may include a protective cover that can cover an outdoor power interface to implement dust and water prevention functions. In this manner, the user may prepare one outdoor power supply device, connect the outdoor power supply device through the interface on the power supply connection portion 14 or the power cord connected to the interface, and place the outdoor power supply device in the storage space so that the user drags the electric wagon 100 and the outdoor power supply device together.

In this example, the electric wagon 100 is powered by the battery pack 141. The battery pack 141 may have cylindrical cells. Alternatively, the battery pack may be a pouch battery pack with multiple pouch cells stacked.

In some examples, the battery pack 141 may have lithium battery units. Alternatively, the battery pack may have lithium iron phosphate battery units. Alternatively, the battery pack may have both lithium battery units and lithium iron phosphate battery units.

In an example, the electric wagon 100 may be further provided with a power output interface capable of outputting electrical energy of the battery pack 141 or the external power supply device to power other electric devices. For example, the power output interface is a Universal Serial Bus (USB) Type-A interface, a USB Type-C interface, or the like and may supply power to a smart device, lighting fixture, or picnic appliance, etc. of the user having a USB interface. In an example, the power output interface may be disposed at an adjacent position around the power supply connection portion 14, for example, disposed on the battery compartment body 1422 of the battery compartment 142. In an example, the power output interface may be disposed on the handle device 12. In an example, the power output interface may be disposed at a position such as the front end, rear end, left side, right side, or lower side of the storage space 13.

In an example, the electric wagon 100 may be provided with both the battery compartment 142 configured to be connected to the battery pack 141 and an external power supply connection terminal configured to be connected to the external power supply device. For example, the battery pack 141 may be used to supply power in the process of dragging or pushing the electric wagon 100. When the power output interface 15 on the electric wagon 100 is used for supplying power to an external powered device, the external power supply device may be used to supply power.

In an example, the electric wagon 100 may have at least two battery compartments. That is to say, the electric wagon 100 may be powered by at least two battery packs 141, thereby extending the battery life of the electric wagon 100. In this example, the at least two battery packs 141 may simultaneously supply power to the electric wagon 100, may supply power to the electric wagon 100 at different times, or may supply power to the electric wagon 100 by turns, that is, one battery pack 141 supplies power for a period of time and then another battery pack 141 supplies power. In other examples, a controller 10 in the electric wagon 100 may determine power supply times or a power supply sequence of multiple battery packs 141 according to power, voltages, temperatures, or other situations of the battery packs 141. In some examples, the electric wagon 100 may include 1, 2, 3, 4, 5, or 6 battery packs. In some examples, the electric wagon 100 may include at least three batteries. In some examples, the electric wagon 100 may include at least four battery packs. In some examples, the electric wagon 100 may include two power interfaces electrically connected to two battery packs 141 one to one and may also include a backup storage compartment for storing a backup battery.

In some examples, the electric wagon 100 includes a built-in battery. The built-in battery may be understood as a battery that is generally not detached or a battery that is inconvenient for the user to quickly detach.

In this example, the energy of the battery pack 141 powering the electric wagon 100 is greater than or equal to 40 Wh. In an example, the energy of the battery pack 141 powering the electric wagon 100 is greater than or equal to 40 Wh and less than or equal to 800 Wh. In an example, the battery pack 141 may be a lithium-ion battery, a lithium iron phosphate battery, a capacitor battery, a sodium-ion battery, or a mixed-cell battery, that is, the battery pack 141 includes cells made of multiple different materials.

In this example, the ratio of the energy of the battery pack 141 powering the electric wagon 100 to the weight of the electric wagon 100 is greater than or equal to 5 Wh/kg and less than or equal to 100 Wh/kg. For example, the ratio of the energy of the battery pack 141 powering the electric wagon 100 to the weight of the electric wagon 100 is 5 Wh/kg, 10 Wh/kg, 13 Wh/kg, 15 Wh/kg, 20 Wh/kg, 30 Wh/kg, 40 Wh/kg, 50 Wh/kg, 60 Wh/kg, 70 Wh/kg, 80 Wh/kg, 90 Wh/kg, or 100 Wh/kg.

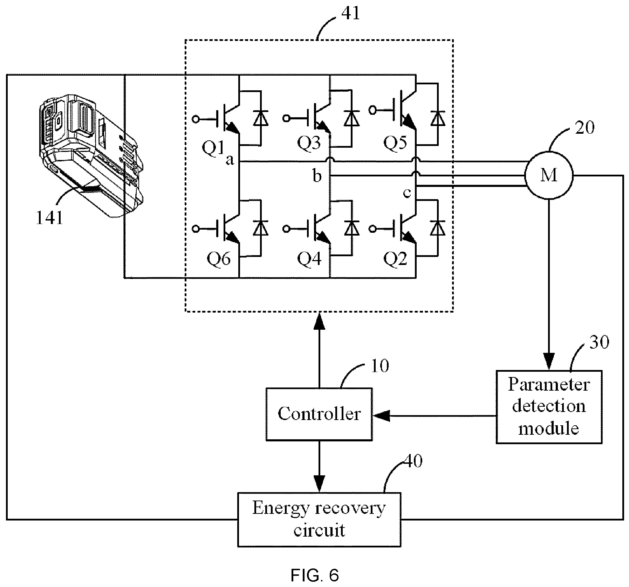

Referring to the structure and control system of the electric wagon 100 shown in FIGS. 1 to 4 and 6, the electric wagon 100 further includes a mode selection switch 16, the controller 10, a drive motor 20, a parameter detection module 30, and a power display device. In an example, a safety switch (not shown) may be further included. The controller 10 may be disposed on a control board. The controller 10 is disposed on a circuit board, and the circuit board includes a printed circuit board (PCB) and a flexible printed circuit (FPC). The control board may generally be encapsulated in a closed electric control box or electric control module, and a position of the control board may be understood as a position of the electric control box or electric control module. In this example, the controller 10 adopts a dedicated control chip such as a single-chip microcomputer or a microcontroller unit (MCU).

In an example, the control board may be disposed adjacent to the power supply connection portion 14 (for example, adjacent to the periphery of the battery compartment), on any outer surface of the battery compartment, or in the battery compartment. In this example, the control board is powered by the battery pack 141.

In this example, the control board and the battery pack 141 are both disposed at the rear end of the electric wagon 100. Alternatively, the control board and the battery pack 141 may be disposed on the rear side of an axle of a rear wheel group in the walking assembly 17. The rear wheel group in this example includes the driving wheels 171.

In an example, the control system of the electric wagon 100 may further include an energy recovery circuit 40. The energy recovery circuit 40 is disposed on the control board and electrically connected to at least the controller 10 and the drive motor 20. In this example, the energy recovery circuit 40 can convert potential energy or kinetic energy generated by the electric wagon 100 into electrical energy and charge the battery pack 141 reversely. During operation of the energy recovery circuit 40, the drive motor 20 serves as a generator to generate electrical energy for charging. For example, during deceleration of the drive motor 20, the controller 10 can control the energy recovery circuit 40 to recover electrical energy to charge the battery pack 141. In an example, in the downhill process of the electric wagon 100, the walking assembly 17 of the electric wagon 100 rotates at a faster speed due to the gravity of the electric wagon 100. Optionally, in the downhill process of the electric wagon 100, the drive motor 20 may decelerate or brake. When the electric wagon 100 moves downhill, the energy recovery circuit 40 can generate charging electrical energy to charge the battery pack 141.

In an example, when the electric wagon 100 has the at least two battery packs 141, the controller 10 may control the battery packs 141 to supply power to the drive motor 20 at different times, and the battery pack 141 with lower energy may be charged by the charging electrical energy generated by the energy recovery circuit 40.

In the related art, in the process of charging the battery pack by the charging electrical energy generated by the energy recovery circuit 40, if the battery pack is fully charged, the battery pack has a risk of being damaged. In the other aspect, in a vector control scheme of the drive motor 20, a current of the drive motor 20 may be equivalent to a current for forming a magnetic field and a current for providing torque. When the drive motor 20 is decelerated at an excessively fast speed, a charge current generated by the drive motor 20 increases. If the battery pack is charged by an excessively large current, the battery pack is also damaged.

In this example, when it is determined that the energy recovery circuit 40 generates a current for the drive motor 20 to charge the battery pack 141, the current for providing the torque is reduced when a preset condition is satisfied to reduce a charge current and voltage. Meanwhile, the current for forming the magnetic field is increased to maintain torque for deceleration or braking. The preset condition includes any one of the following: a battery pack voltage satisfies a threshold, a current-related parameter of the drive motor 20 satisfies a threshold, a speed-related parameter of the drive motor 20 satisfies a threshold, or a manual operation of the user is required.

In some examples, when it is determined that the energy recovery circuit 40 generates the current for the drive motor 20 to charge the battery pack 141, the utilization of the charge current generated by the drive motor 20 is enabled when the preset condition is satisfied. A current utilization manner includes recycling the current using a power resistor. In this example, the power resistor is disposed close to the battery compartment 142. In some examples, the current utilization manner includes using the charge current generated by the drive motor 20 to power, for example, a lighting lamp, an indicator light, and an additional drive motor 20, so as to prevent the battery pack from being damaged. The preset condition includes any one of the following: the battery pack voltage satisfies the threshold, the current-related parameter of the drive motor 20 satisfies the threshold, the speed-related parameter of the drive motor 20 satisfies the threshold, or the manual operation of the user is required.

In this example, the electric wagon 100 may further include the parameter detection module 30 capable of detecting a walking state of the electric wagon 100. The walking state of the electric wagon 100 includes at least the walking state, a stop state, an uphill state, a downhill state, an accelerating state, and a decelerating state. The controller 10 may control, according to the walking state, the energy recovery circuit 40 to operate or not. For example, when the electric wagon 100 is in the decelerating state or the downhill state, the controller 10 controls the energy recovery circuit 40 to generate the charging electrical energy to charge the battery pack 141.

In an example, the parameter detection module 30 detects the rotational speed or operating current of the drive motor 20. In an example, the parameter detection module 30 detects a forward direction of the electric wagon 100. In an example, the parameter detection module 30 detects the angle between the handle device 12 and the wagon body 11. In an example, the parameter detection module 30 detects an inclination angle between the wagon body 11 and a horizontal plane. In an example, the parameter detection module 30 detects the magnitude and direction of a force applied by the user to the handle device 12. In an example, the parameter detection module 30 detects a walking speed or acceleration of the user. A specific type of the parameter detection module 30, the number of parameter detection modules 30, a parameter collection form of the parameter detection module 30, and the like are not limited in the present application.

In an example, the parameter detection module is further configured to detect operation information input by the user, and the controller is configured to adjust an assistance state of the drive motor according to the operation information. For example, the parameter detection module has a human-machine interaction interface such as a button, a toggle, or a screen, and the user generates different operation instructions through different operations on the human-machine interaction interface.

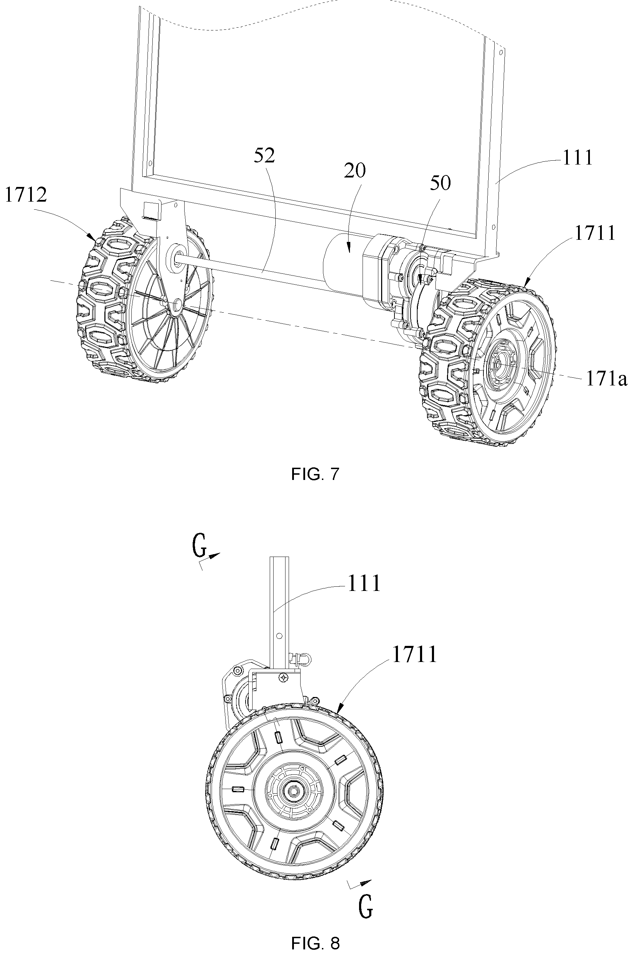

As shown in FIGS. 7 to 12, in an example, the drive motor 20 is mounted between two driving wheels 171 and drives at least one of the driving wheels 171 to rotate. In this example, the drive motor 20 can simultaneously drive the two driving wheels 171 to rotate. In this example, the driving wheels 171 are rear wheels of the electric wagon 100, that is, walking wheels disposed on a side facing away from the handle device 12. The driving wheels 171 include a left driving wheel 1711 and a right driving wheel 1712 that are disposed in the left and right direction. In this example, the left driving wheel 1711 and the right driving wheel 1712 are each provided with one wheel. Optionally, the left driving wheel 1711 and the right driving wheel 1712 are each provided with two or more wheels. The specific number of left driving wheels 1711 and the specific number of right driving wheels 1712 do not affect the substantive content of the present application.

As shown in FIG. 7, the drive motor 20 is disposed on the frame 111. Optionally, the drive motor 20 is connected to the bottom portion 1111 of the frame 111. The drive motor 20 is disposed on a side facing the power supply connection portion 14.

As shown in FIGS. 7 to 12, the electric wagon 100 further includes a transmission mechanism 50 configured to transmit power from the drive motor 20 to the driving wheels 171. Optionally, the electric wagon 100 further includes a clutch mechanism 54 for enabling or cutting off power transmission from the drive motor 20 to the driving wheels 171. It is to be noted that the drive motor 20, the transmission mechanism 50, and the clutch mechanism 54 may share some structures. Meanwhile, the transmission mechanism 50 and the clutch mechanism 54 may be selectively disposed according to different actual product requirements. In some examples, the electric wagon 100 includes the drive motor 20 and the transmission mechanism 50. In some examples, the electric wagon 100 includes the drive motor 20 and the clutch mechanism 54. In some examples, the electric wagon 100 includes the drive motor 20, the transmission mechanism 50, and the clutch mechanism 54. In some examples, the electric wagon 100 includes the drive motor 20.

In this example, the transmission mechanism 50 includes a reduction assembly 51 and a differential assembly 53. The drive motor 20 includes a drive shaft 21 rotating about a first axis 101. The reduction assembly 51 and the differential assembly 53 connect the drive shaft 21 to the driving wheels 171.

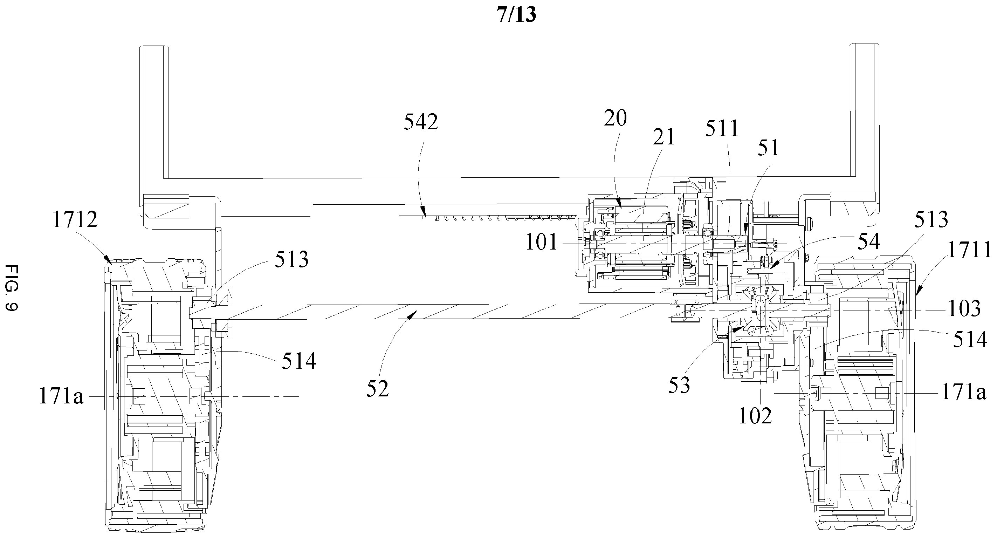

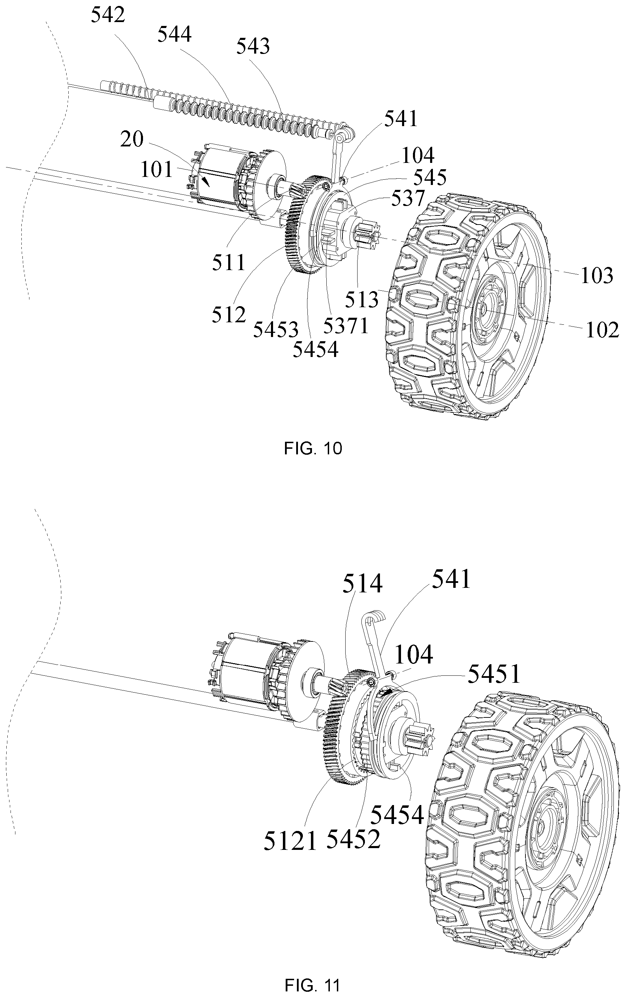

As shown in FIGS. 9 and 10, the reduction assembly 51 includes a first driving gear 511, a first driven gear 512, a second driving gear 513, and a second driven gear 514. In a transmission connection, the first driving gear 511 is formed on or connected to the drive shaft 21 of the drive motor. Optionally, the first driving gear 511 is coaxially connected to an output end of the drive shaft 21. Thus, the first driving gear 511 rotates about the first axis 101. The first driven gear 512 meshes with the first driving gear 511 to form a reduction drive with a certain gear ratio. Optionally, the gear ratio is greater than 1. The first driven gear 512 and the second driving gear 513 rotate basically coaxially. The second driving gear 513 meshes with the second driven gear 514 to form a reduction drive with a certain gear ratio. In this example, the second driven gear 514 rotates about a central axis 171a of the driving wheels 171. The second driven gear 514 is disposed in the driving wheel 171. For example, the left driving wheel 1711 and the right driving wheel 1712 are connected by a coupling assembly 52. Second driving gears 513 are disposed at two ends of the coupling assembly 52 one to one. Second driven gears 514 are disposed in the left driving wheel 1711 and the right driving wheel 1712, respectively. Thus, the drive motor 20 outputs power to drive the driving wheels 171 of the electric wagon 100 to rotate. In this example, the first driven gear 512 meshes externally with the first driving gear 511. The first driven gear 512 and the first driving gear 511 are each a cylindrical gear. The second driven gear 514 meshes externally with the second driving gear 513. The first driven gear 512 and the first driving gear 511 are each the cylindrical gear. In some alternative examples, the reduction assembly 51 adopts one of or a combination of bevel gear transmission, worm transmission, and planet gear transmission. It is to be understood that in the connection and power transmission between a gear and a spindle, connection structures for supporting a bearing and the frame and a dustproof protective housing are provided as required, which are well known in the art and have been fully disclosed to those skilled in the art.

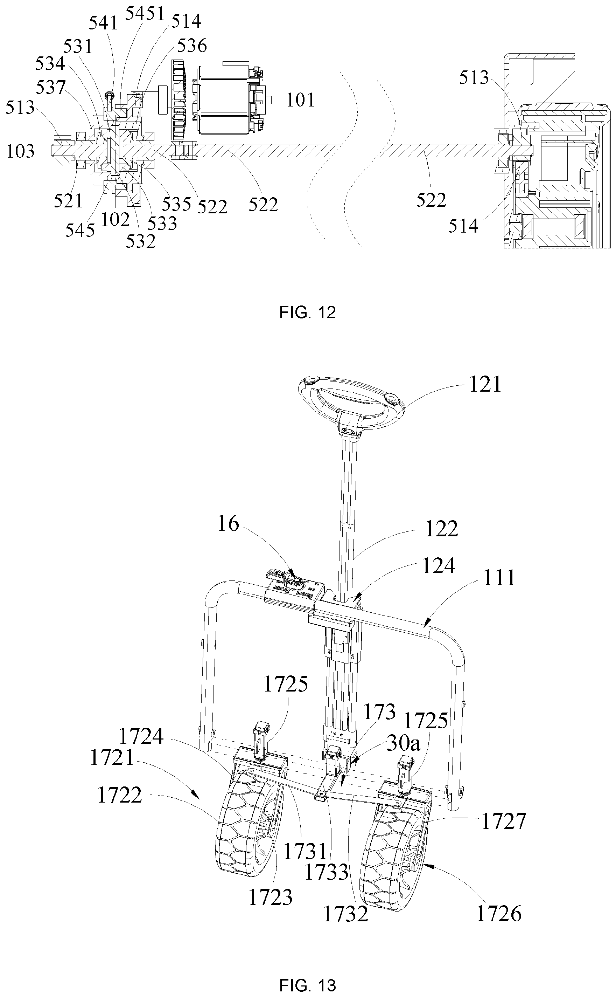

In this example, a speed difference between the inner wheel and the outer wheel is to be achieved during a turn of the electric wagon 100 to achieve smooth turning. In this example, the differential assembly 53 is disposed to enable the electrically driven driving wheels 171 to travel at different speeds. As shown in FIG. 12, the differential assembly 53 includes a first bevel gear 531, a first connecting shaft 532, a second bevel gear 533, a third bevel gear 534, a second connecting shaft 521, a fourth bevel gear 535, and a third connecting shaft 522. The first connecting shaft 532 connects the first bevel gear 531 to the second bevel gear 533. The first bevel gear 531 and the second bevel gear 533 separately rotate about the first connecting shaft 532. The centerline of the first connecting shaft 532 is set as a second axis 102. The first bevel gear 531 and the second bevel gear 533 are located at two ends of the first connecting shaft 532 and do not mesh with each other. Optionally, the first bevel gear 531 and the second bevel gear 533 are arranged in parallel. The third bevel gear 534 meshes with the first bevel gear 531 and the second bevel gear 533. The fourth bevel gear 535 meshes with the first bevel gear 531 and the second bevel gear 533. The third bevel gear 534 is connected to the second driving gear 513 through the second connecting shaft 521 so that the third bevel gear 534 is connected to one driving wheel 171. In this example, the third bevel gear 534 is connected to the right driving wheel 1712. The fourth bevel gear 535 is connected to the third connecting shaft 522, and the fourth bevel gear 535 is connected to the right driving wheel 1712. The second connecting shaft 521 is basically parallel to the third connecting shaft 522. The second connecting shaft 521 and the third connecting shaft 522 are each basically perpendicular to the first connecting shaft 532.

To achieve a smooth power transmission path of the drive motor 20, the differential assembly 53 further includes a first transmission connection portion 536 configured to connect the first driven gear 512 to the first connecting shaft 532. The first transmission connection portion 536 is embedded in the first driven gear 512, and the two ends of the first connecting shaft 532 are connected to the first transmission connection portion 536. In this example, when the first driven gear 512 is driven to rotate, the first transmission connection portion 536 drives the first bevel gear 531 and the second bevel gear 533 on the first connecting shaft 532 to separately rotate about an axis of the first driven gear 512, and the first bevel gear 531 and the second bevel gear 533 separately drive the third bevel gear 534 and the fourth bevel gear 535 meshing therewith to rotate. In this example, the first driven gear 512, the first transmission connection portion 536, and the second connecting shaft 521 are coaxial so that the first driven gear 512 and the second driving gear 513 rotate coaxially. A rotation axis of the first driven gear 512, the first transmission connection portion 536, the second connecting shaft 521, and the second driving gear 513 is set as a third axis 103. The third axis 103 is parallel to the central axis 171a of the driving wheels but does not coincide with the central axis 171a of the driving wheels. In this example, the first bevel gear 531 and the second bevel gear 533 rotate about the third axis 103 to drive the third bevel gear 534 and the fourth bevel gear 535 to rotate, thereby transmitting a rotational drive force of the drive motor 20 to the left driving wheel 1711 and the right driving wheel 1712. That is, the first bevel gear 531 and the second bevel gear 533 transmit power through "revolutions". When the electric wagon 100 turns, the speed difference is generated between the inner wheel and the outer wheel. In this example, the third bevel gear 534 and the fourth bevel gear 535 rotate at different speeds. Since the first bevel gear 531 and the second bevel gear 533 are also configured to "spin" about the second axis 102, the inner walking wheel rotates at a slower speed, and the outer walking wheel rotates at a faster speed. The differential assembly 53 is low in cost and light in weight.

In this example, no matter whether the driving wheels rotate in a forward direction (move forward) or in a reverse direction (move backward), the differential assembly 53 can be used to implement its function. When the electric wagon 100 is in the downhill state, the walking wheels of the electric wagon 100 increase in speed due to gravity. The walking wheels are actively decelerated through a differential to buffer the acceleration of the walking wheels due to gravity so that the rotational speed of the driving wheels can be basically maintained within a rotational speed range of the driving wheels driven by the drive motor 2020.

In this example, the third bevel gear 534, the second connecting shaft 521, the fourth bevel gear 535, and the third connecting shaft 522 are part of the coupling assembly 52. Optionally, the third connecting shaft 522 includes a left shaft and a right shaft connected coaxially. Thus, the left driving wheel 1711 and the right driving wheel 1712 are connected with flexibility.

As shown in FIGS. 10 to 12, the electric wagon 100 may be further provided with the clutch mechanism 54. The clutch mechanism 54 generally has two states. When the clutch mechanism 54 is in a first state, the transmission between the drive motor 20 and the driving wheels 171 can be cut off. When the clutch mechanism 54 is in a second state, power is transmitted between the drive motor 20 and the driving wheels 171. In some examples, the electric wagon 100 switches between an electronically power assisted state and a non-assisted state through the clutch mechanism 54. It is to be understood that electronic power assistance refers to that the controller 10 can control the drive motor 20 to drive the driving wheels 171 to rotate to assist the user in dragging or pushing the wagon, and no electronic power assistance refers to being pushed with manpower as a common picnic wagon. In some examples, the clutch mechanism 54 also makes the driving wheels fail to reversely drive the drive motor to rotate in the case of no electronic power assistance, so as to avoid damages to the drive motor.

As shown in FIGS. 9 to 11, the clutch mechanism 54 includes a shift fork 541, a clutch control portion, and a clutch body 545. In this example, the clutch body 545 is disposed on a torque transmission path between the first driven gear 512 and the driving wheels 171. Optionally, the clutch body 545 is disposed on a torque transmission path between the first driven gear 512 and the second driving gears 513. In some examples, the clutch body 545 is disposed on a torque transmission path between the first driven gear 512 and the differential assembly 53.

The clutch body 545 includes a meshing portion 5451, a connection groove portion 5453, and limiting protrusions 5454. The meshing portion 5451 is selectively connected to the first driven gear 512. As shown in FIGS. 10 and 11, the meshing portion 5451 includes an external tooth portion 5452, and the first driven gear 512 is provided with an internal tooth portion 5121 mating with the external tooth portion 5452. When the clutch mechanism 54 is in the second state, as shown in FIG. 10, the external tooth portion 5452 meshes with the internal tooth portion 5121. When the clutch mechanism 54 is in the first state, as shown in FIG. 11, the external tooth portion 5452 is disengaged from the internal tooth portion 5121. The second driving gear 513 is connected to a second transmission connection portion 537. The second transmission connection portion 537 drives the second driving gear 513 to rotate. The second transmission connection portion 537 is provided with limiting grooves 5371, and the limiting grooves 5371 mate with the limiting protrusions 5454 so that the second driving gear 513 and the clutch body 545 are limited circumferentially, that is, the second driving gear 513 and the clutch body 545 rotate together. However, the clutch body 545 has an axial displacement relative to the second transmission connection portion 537 so that the clutch body 545 switches between the first state and the second state. The external tooth portion 5452 meshes with the internal tooth portion 5121, and the rotation of the first driven gear 512 is transmitted to the second driving gear 513 through the clutch body 545. As shown in FIG. 11, the external tooth portion 5452 is disengaged from the internal tooth portion 5121, and the rotation of the first driven gear 512 cannot be transmitted to the clutch body 545 so that the power transmission path between the first driven gear 512 and the second driving gear 513 is disconnected.

The shift fork 541 mates with the connection groove portion 5453 of the clutch body 545. The shift fork 541 rotates about a fourth axis 104 to drive the clutch body 545 to move repeatedly along an axial direction of the third axis 103 so that the clutch body 545 switches between the first state and the second state. The shift fork 541 is connected to the connection groove portion 5453 and the clutch control portion on two sides of the fourth axis 104. In this example, the clutch control portion includes a control cord 542 and a reset portion 544. The shift fork 541 is shifted through the control cord 542 to move the clutch body 545 towards a position in the first state. In this example, the control cord 542 is operated and controlled by the user. Optionally, the control cord 542 is connected to the mode selection switch 16. Optionally, the electric wagon 100 is provided with a separate operating element for driving the control cord 542. The reset portion 544 includes a coil spring to assist the clutch body 545 in moving from the position in the first state to a position in the second state. In some examples, the reset portion 544 is further configured to provide the clutch body 545 with a retaining force for keeping the clutch body 545 at the position in the second state. In this example, to implement dust prevention and protect the control cord 542, a protective sheath 543 is sleeved on the outer side of the control cord 542.

In some examples, the clutch mechanism further includes another mechanical clutch mechanism, such as a ratchet clutch, a centrifugal clutch, a friction clutch, or a hydraulic clutch. The simple variations or combinations of the above mechanical clutches can be used as the clutch mechanism of the present application. On the premise that the function of the clutch mechanism of the present application can be implemented, the specific structural form does not affect the substantive content of the present application.

In some alternative examples, a clutch may be a one-way bearing or an overrunning clutch.

In some examples, the clutch mechanism further includes an electronic clutch, such as an electromagnetic clutch. The electromagnetic clutch is, for example, a dry type single-disc electromagnetic clutch, a dry type multi-disc electromagnetic clutch, a wet type multi-disc electromagnetic clutch, a magnetic powder clutch, or a slip electromagnetic clutch.

In some examples, the mechanical clutch mechanism and the electronic clutch may be coupled for use.

As shown in FIG. 13, in this example, the driven wheels 172 are a front wheel group of the electric wagon 100, that is, walking wheels disposed on a side facing the handle device 12. The driven wheels 172 include a left driven wheel 1721 and a right driven wheel 1726 disposed in the left and right direction. In this example, the left driven wheel 1721 and the right driven wheel 1726 are each provided with one wheel 1722. Optionally, the left driven wheel 1721 and the right driven wheel 1726 are each provided with two or more wheels. The specific number of left driven wheels 1721 and the specific number of right driven wheels 1726 do not affect the substantive content of the present application. The left driven wheel 1721 includes the wheel 1722, an axle 1723, and a left wheel carrier 1724. The right driven wheel 1726 includes the wheel 1722, the axle 1723, and a right wheel carrier 1727. With the left driven wheel 1721 as an example, the wheel 1722 is mounted onto the left wheel carrier 1724 through the axle 1723. The wheel 1722 rotates around the axle 1723. The left wheel carrier 1724 is connected to the frame 111 through a spindle 1725. The left wheel carrier 1724 rotates relative to the frame 111 about the centerline of the spindle 1725 to achieve steering.

A pull rod linkage assembly 173 is provided between the left driven wheel 1721 and the right driven wheel 1726 and configured to actively drive the driven wheels 172 to turn when the electric wagon 100 turns. The pull rod linkage assembly 173 includes a first connecting rod 1731, a second connecting rod 1732, and a first steering rod 1733. In this example, the first connecting rod 1731 connects the spindle 1725 of the left driven wheel 1721 to the first steering rod 1733. The second connecting rod 1732 connects the spindle 1725 of the right driven wheel 1726 to the first steering rod 1733. The first connecting rod 1731 is rotatably connected to the spindle 1725 of the left driven wheel 1721 and the first steering rod 1733. The second connecting rod 1732 is rotatably connected to the spindle 1725 of the right driven wheel 1726 and the first steering rod 1733. The first steering rod 1733 is connected to the handle device 12. In this example, the first steering rod 1733 and the handle device 12 move in the same direction. In this example, the first steering rod 1733 is rotatably connected to the frame 111 to ensure the stable fixation of the pull rod linkage assembly 173.

With a left turn as an example, the handle device 12 is driven to move leftwards, the first steering rod 1733 is connected to the handle device 12, and the handle device 12 drives the first steering rod 1733 to rotate to drive the first connecting rod 1731 and the second connecting rod 1732 to swing correspondingly. The first connecting rod 1731 drives the left wheel carrier 1724 to rotate, and the second connecting rod 1732 drives the right wheel carrier 1727 to rotate so that the rotation of the handle device 12 is converted into the corresponding steering of the left driven wheel 1721 and the right driven wheel 1726. Thus, the left driven wheel 1721 and the right driven wheel 1726 are subjected to forces to actively steer instead of being driven to steer due to friction on the ground or passive dragging. Less effort is required for turning.

In this example, the drive motor 20 may be a drive outrunner 20. In some examples, the drive motor may be a drive inrunner 20. In an example, the rated output power of the drive outrunner 20 is greater than or equal to 100 W and less than or equal to 800 W, which, for example, may be 100 W, 200 W, 300 W, 400 W, 500 W, 600 W, 700 W, or 800 W.

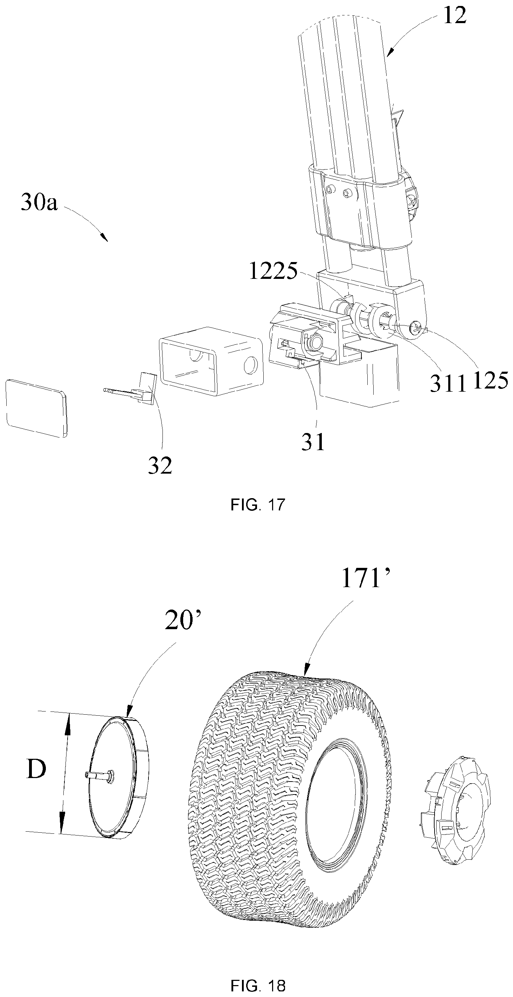

In some alternative examples, as shown in FIG. 18, a drive motor 20' may be integrated into a driving wheel 171', that is, the drive motor 20' is a hub-drive motor. In this example, the total rated output power of the hub-drive motor 20' is greater than or equal to 100 W and less than or equal to 800 W. For example, the total rated output power may be 100 W, 200 W, 300 W, 400 W, 500 W, 600 W, 700 W, or 800 W.

In an example, the length D of the hub-drive motor 20' along a radial direction of the driving wheel 171' is greater than or equal to 100 mm and less than or equal to 250 mm. For example, the length D may be 100 mm, 120 mm, 130 mm, 150 mm, 200 mm, 230 mm, or 250 mm. In this example, one hub-drive motor 20' is disposed in each of two driving wheels 171', and the rated output power of each hub-drive motor 20' is greater than or equal to 50 W and less than or equal to 400 W. The hub-drive motor 20' is used so that the structure of the transmission mechanism can be simplified and the number of components can be reduced.

**In** an example, the controller 10 may control, according to a switch state of the mode selection switch 16, the assistance state of the drive motor 20, such as assistance or no assistance. For example, when the mode selection switch 16 is in an on state, that is, a second switch state, the controller 10 may control the drive motor 20 to provide assistance. When the mode selection switch 16 is in an off state, that is, a first switch state, the controller 10 may control the drive motor 20 not to provide assistance. For example, when the wagon is dragged or pushed to walk, the mode selection switch 16 may be triggered to be in the on state so that the drive motor 20 provides assistance. When the wagon stops walking, the mode selection switch 16 is triggered again to be turned off so that the drive motor 20 stops the assistance. **In** an example, a trigger manner of the mode selection switch 16 is related to a type of the switch. For example, when the mode selection switch 16 is a toggle switch or a push switch, the trigger manner is toggling or pressing. **In** an example, the mode selection switch 16 may be manually triggered by the user or may be automatically triggered. For example, when the electric wagon 100 is pushed or dragged to displace or be about to displace, the mode selection switch 16 may be automatically triggered to be turned on so that the drive motor 20 can provide assistance. When the electric wagon 100 stops or is about to stop, the mode selection switch 16 may be automatically triggered to be turned off so that the drive motor 20 no longer provides the assistance.

**In** some examples, the mode selection switch 16 includes a self-reset member. When triggered by the user, the mode selection switch is in one state, such as the on or off state. When released by the user, the mode selection switch is in the other state. Optionally, an initial state or a released state of the mode selection switch is the on state, that is, the assistance is provided by default. When triggered by the user, the mode selection switch is in the off state, that is, the user can stop the assistance according to actual use situations. Optionally, the mode selection switch is a self-reset switch.

**In** an example, the mode selection switch 16 may have multiple switch gears in the second switch state, and the drive motor 20 has different output speeds or output torque in different switch gears. For example, the controller 10 may control, according to the magnitude of a switch gear of the mode selection switch 16 in the second switch state, the drive motor 20 to output the corresponding torque or rotational speed to adapt to a target requirement in the gear. **In** an example, different switch gears may include a power-saving gear, a labor-saving gear, a smooth road gear, a lawn gear, a slope gear, an uphill gear, a downhill gear, and so on.

**In** an example, the safety switch may be disposed to prevent the mode selection switch 16 from being triggered by mistake. For example, in the case where the safety switch is not turned on, the drive motor 20 provides no assistance no matter whether the mode selection switch 16 is turned on.

**In** an example, as shown in FIGS. 1 to 3, the mode selection switch 16 is the toggle switch. **In** some examples, the mode selection switch 16 is a microswitch, a rocker switch, a touch switch, a voice operated switch, or the like.

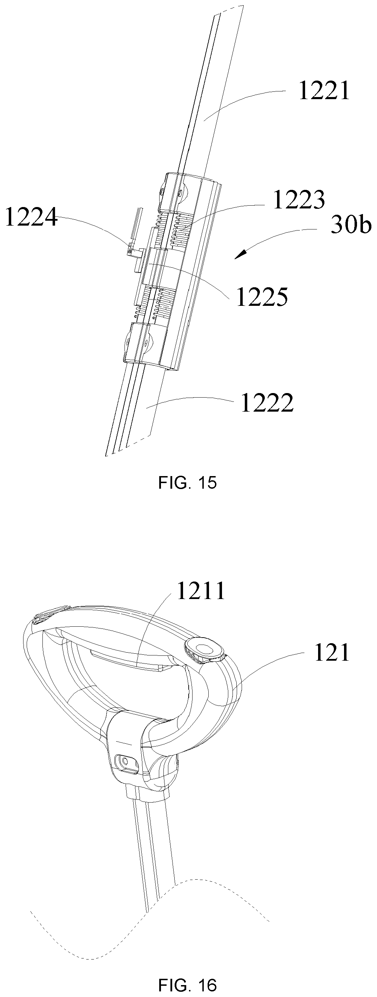

As shown in FIGS. 13 and 16, as an example of manual control of the drive motor 20, the grip 121 is provided with a first trigger switch 1121. Optionally, the grip 121 is provided with a grip region, and the first trigger switch 1121 is disposed in the grip region. Optionally, the first trigger switch 1121 is disposed in a four-finger operation region of the user. When the first trigger switch 1121 is triggered, the controller 10 controls the drive motor 20 to start and provide assistance. When the first trigger switch 1121 is not triggered or is released, the controller 10 controls the drive motor 20 to decelerate or gradually decelerate to stop.

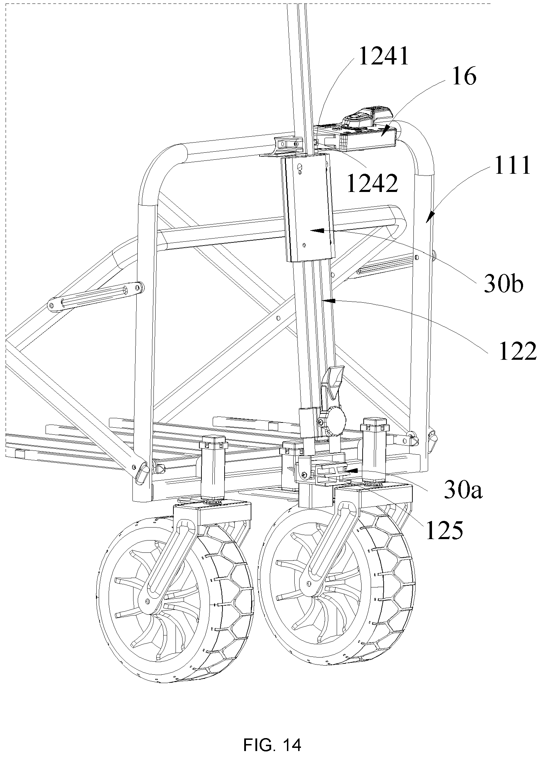

As shown in FIGS. 14 and 15, as another example of manual control of the drive motor, the handle device 12 is provided with a force direction detection portion 30b. The force direction detection portion 30b can send a corresponding signal when the handle device 12 is dragged or pushed so that the parameter detection module 30 identifies whether the force applied by the user is a pulling force or a pushing force. In this example, the force direction detection portion 30b is disposed on the connecting rod 122. Optionally, the force direction detection portion 30b includes a displacement sensor 1224. The connecting rod 122 includes an upper rod 1221 and a lower rod 1222 which displace relatively in an axial direction. A reset structure 1223 is connected between the upper rod 1221 and the lower rod 1222. When the user applies the pulling force or the pushing force to the handle device 12, the upper rod 1221 displaces relative to the lower rod 1222 in different directions. The displacement sensor 1224 includes a Hall sensor. Any one of the Hall sensor and a magnet 1225 moves with the upper rod 1221 and the other does not move with the upper rod 1221. The reset structure 1223 is configured to provide the upper rod 1221 with a force for resetting the upper rod 1221 when the upper rod 1221 is operated to displace axially. In this example, when the displacement sensor 1224 determines that the upper rod 1221 is operated to approach the lower rod 1222, a signal for controlling the drive motor 20 to decelerate is sent to the controller 10.

Alternatively, in some examples, the parameter detection module of the electric wagon 100 may include a speed regulation switch. The user may control a walking speed of the electric wagon 100 through the speed regulation switch, for example, may control the electric wagon 100 to walk in different speed gears or may control the walking speed of the electric wagon 100 steplessly. Optionally, the speed regulation switch includes a rotary operating member and a position sensor. Optionally, the position sensor is a Hall sensor, a magnet is disposed on the rotary operating member, and the Hall sensor is disposed in the grip 121 without rotating. The user operates the rotary operating member to change the angle between the magnet and the Hall sensor, and the Hall sensor sends different analog signals, so as to control different rotational speeds of the drive motor. Optionally, when the rotary operating member is rotated counterclockwise, the drive motor 20 controls the electric wagon 100 to move forward. The larger the angle of rotation, the higher the rotational speed of the drive motor 20. When the rotary operating member is rotated clockwise, the controller 10 controls the drive motor 20 to rotate reversely and controls the drive motor 20 to move at a constant speed, so as to achieve constant-speed backing. The rotary operating member is rotated in a reset direction to decelerate the wagon and brake the wagon when reset to an initial position.

As another example of manual control of the drive motor 20, as shown in FIG. 14, the wagon body 11 is provided with a reset detection portion 124 for the handle device 12. When the reset detection portion 124 detects that the handle device 12 returns to a preset state, the drive motor 20 stops or does not start in response. Optionally, the reset detection portion 124 includes a contact switch. Optionally, the wagon body 11 is provided with a fixing portion. The fixing portion includes a slot 1241 and a one-way snap 1242 and the contact switch that are disposed in the slot 1241. When the connecting rod 122 is snap-fit in the slot 1241, the connecting rod 122 abuts against the contact switch (such as a membrane switch or a rocker switch) so that the contact switch changes in state and sends a signal to the controller 10. The one-way snap 1242 limits the connecting rod 122 in the slot 1241, the connecting rod 122 being snap-fit in the slot 1241. In some examples, an unlocking portion connected to the one-way snap 1242 is further provided. The connecting rod 122 is released from the slot 1241 through the unlocking portion. In some examples, the connecting rod 122 is retained or released through the elastic deformation of the slot 1241.

In an example, a wagon parameter of the electric wagon 100 detected by the parameter detection module 30 includes an operating parameter of the drive motor 20, a state parameter of the handle device 12 relative to the wagon body 11, the magnitude and direction of the force applied by the user to the handle device 12, or a walking speed of the user. The controller 10 may adaptively adjust the assistance state of the drive motor 20 according to the above wagon parameter. In addition to assistance or no assistance, the assistance state may include output torque or an output speed of the drive motor 20 in the case of assistance. In this example, regardless of operating conditions, the user may maintain a basically constant walking speed or a basically constant pushing force or dragging force to control the wagon to walk so that the user can obtain a comfortable following state. The comfortable following state may be understood as that the controller 10 controls the drive motor 20 to increase or decrease the output torque such that the force applied by the user to the handle device 12 and the drive force of the motor reach a balanced state with the resistance of the ground or wheels or that the controller 10 controls the output speed of the drive motor 20 such that a walking speed of the walking assembly 17 is basically consistent with the walking speed of the user.

In some examples, when determining that the electric wagon 100 is in the downhill state according to the angle between the electric wagon 100 and the horizontal plane and the magnitude and direction of the force applied by the user to the handle device 12, the controller 10 may control the drive motor 20 to reduce the drive force or change a direction of the drive force so that the wagon decelerates, thereby preventing the user from failing to follow the downhill wagon. Alternatively, when determining that the electric wagon 100 is in the uphill state according to the angle between the electric wagon 100 and the horizontal plane and the magnitude and direction of the force applied by the user to the handle device 12, the controller may control the drive motor 20 to increase the drive force so that the user can drag the electric wagon 100 to move uphill without increasing the dragging force applied to the handle device 12.

In some examples, the parameter detection module 30 may include a pressure sensor for the user to detect the force applied by the user to the handle device 12.

Referring to FIGS. 13 and 14, the parameter detection module 30 includes an angle detection portion 30a disposed at a connection between the handle device 12 and the wagon body 11 and configured to detect the angle of rotation of the handle device 12 relative to the wagon body 11. As shown in FIG. 17, the angle detection portion 30a includes a target member connected to the handle device 12 and a position sensor 32. Optionally, the position sensor 32 includes a linear Hall sensor. The linear Hall sensor is fixed and connected to the wagon body 11 through a support 31 and does not move relative to the wagon body 11. The target member includes a magnet 1225. Optionally, the handle device 12 is provided with a shaft sleeve 125. The handle device 12 is rotatably connected to the wagon body 11 through the shaft sleeve 125. The target member further includes a fixing seat 311 for fixing the magnet 1225. The fixing seat 311 is connected to the shaft sleeve 125 and rotates synchronously with the shaft sleeve 125. In this example, when detecting that the angle between the handle device 12 and the wagon body 11 reaches a first preset value, the angle detection portion 30a sends a corresponding signal, and the controller 10 controls the drive motor 20 to decelerate. When detecting that the angle between the handle device 12 and the wagon body 11 reaches a second preset value, the angle detection portion 30a sends a corresponding signal, and the controller 10 controls the drive motor 10 to stop.

In some examples, the force applied by the user to the handle device 12 is determined according to angle information detected by the angle detection portion 30a. In an example, the electric wagon 100 includes the angle detection portion 30a and the force direction detection portion 30b. When the angle detection portion 30a determines that the angle between the handle device 12 and the wagon body 11 is basically 90°, the force direction detection portion 30b is automatically triggered so that the controller 10 can determine that the electric wagon 100 is possibly in a pushed state. In an example, the force direction detection portion 30b may calculate the force applied to the handle device 12 according to a relative displacement between the upper rod 1221 and the lower rod 1222. The controller 10 may determine the magnitude and direction of the force of the user according to detection results of the angle detection portion 30a and the force direction detection portion 30b and then control the drive motor 20 to change a current assistance state so that the user can obtain the comfortable following state. In an example, the parameter detection module 30 may not directly detect the magnitude and direction of the force applied by the user to the handle device 12 but may detect parameters such as the walking speed or acceleration of the electric wagon 100 and the angle between the electric wagon 100 and the horizontal plane. The controller 10 may estimate the magnitude and direction of the force applied by the user according to the above parameters and determine the walking state of the electric wagon 100 or control the assistance state of the drive motor 20 according to the estimated force.

In an example, the controller 10 may identify an operation intention of the user according to the parameter detected by the parameter detection module 30 and adaptively adjust the assistance state of the drive motor 20 according to the identified operation intention so that the user can obtain a more comfortable following state. The operation intention may include a forward dragging intention, a forward parking intention, a backward pushing intention, a backward parking intention, a forward acceleration intention, a forward deceleration intention, a backward acceleration intention, a backward deceleration intention, or the like.

In this example, a driver circuit 41 is disposed between the controller 10 and the drive motor 20, and the driver circuit 41 may include multiple switching elements Q1 to Q6. Each gate terminal of the switching elements is electrically connected to the controller 10 and configured to receive a control signal from the controller 10. Each drain or source of the switching elements is connected to a stator winding of the drive motor 20. The switching elements Q1 to Q6 receive control signals from the controller 10 to change their respective on states, thereby changing a current loaded by the battery pack 141 to stator windings of the motor. In an example, the driver circuit 41 may be a three-phase bridge driver circuit including six controllable semiconductor power devices (such as field-effect transistors (FETs), bipolar junction transistors (BJTs), or insulated-gate bipolar transistors (IGBTs)). It is to be understood that the switching elements may be any other types of solid-state switches, such as the IGBTs or the BJTs. To make the motor rotate, the driver circuit 41 has multiple driving states. In different on states, the motor is in different rotational states.

In an example, the controller 10 may output square wave control signals to control the motor to rotate. In an example, the controller 10 may control the motor to rotate in a field-oriented control (FOC) manner. A control manner adopted by the controller 10 is not limited in the present application.

In an example, the electric wagon 100 may be further provided with a power display device capable of displaying the current power of the battery pack 141. For example, the power display device may be disposed on the handle device 12, the compartment cover of the battery compartment, or the compartment body of the battery compartment. The power display device may be a light-emitting diode (LED) lamp.

In an example, the electric wagon 100 may be further provided with a lighting device. The lighting device may be disposed on the battery compartment, the periphery of the storage space 13, or the handle device 12 or suspended on the wagon body 11.

In some examples, a state indicator portion indicates the assistance state of the drive motor through acousto-optic display. Optionally, the state indicator portion includes a state indicator light for prompting the assistance state of the drive motor. For example, the state indicator light is on in the assisted state, and the state indicator light is off in the non-assisted state. Alternatively, more assistance states are represented by different colors, flickering and always on, different flickering frequencies, or different breathing lamp frequencies. Optionally, the state indicator portion includes an audible indicator for indicating the assistance state of the drive motor, such as a buzzer.

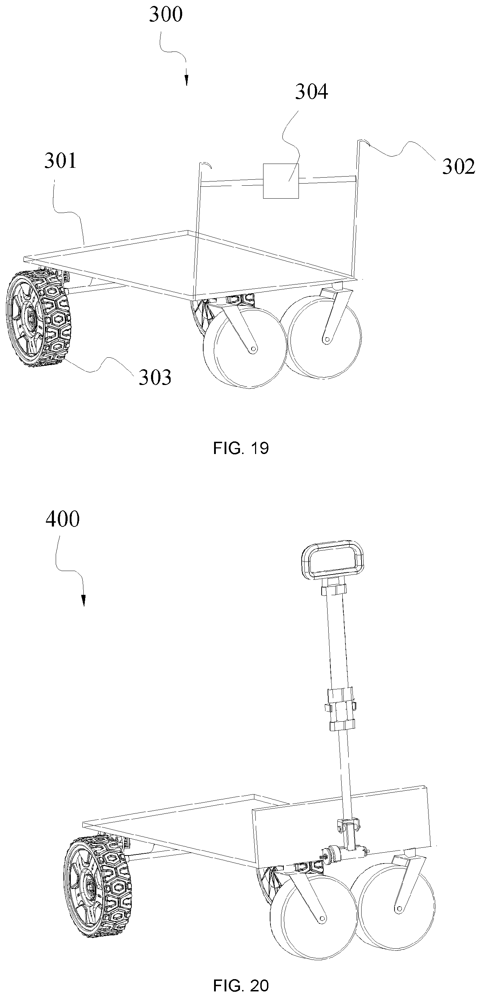

An electric wagon shown in FIG. 19 may be a wagon 300 for a construction site, and a wagon frame 31 of the wagon 300 for the construction site is mainly used for conveying building materials on the construction site, such as cement, mortar, bricks, and steel bars. The wagon 300 for the construction site includes a wagon handle 302, walking wheels 303, and a power supply connection portion 304. Since the wagon 300 for the construction site generally conveys relatively heavy things, hub-drive motors 20 may be provided inside the walking wheels 303 of the wagon to drive driving wheels to walk and assist the operation of the wagon 300. Moreover, to supply power to the hub-drive motors 20, the power supply connection portion 304 may be connected to at least one battery pack. In this example, the battery pack connected to the power supply connection portion 304 may be consistent with the battery pack in the preceding examples, and the related features of the electric wagon 100 for an outdoor picnic in the preceding examples may also be applied to the wagon 300 for the construction site in this example. For example, an adaptive assistance manner of a controller in the wagon 300 for the construction site, a type and power supply manner of the battery pack, and the like are not repeated one by one here.

An electric wagon shown in FIG. 20 may be a wagon 400 for a warehouse. The wagon 400 for the warehouse may also include the battery pack, the hub-drive motors 20, the adaptive assistance mode, and the like involved in the wagon for the outdoor picnic or the wagon for the construction site.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An electric wagon, comprising:
a wagon body comprising at least a frame;
a handle device connected to the wagon body;
a walking assembly at least comprising driving wheels;
a drive motor configured to drive the driving wheels to rotate;
a power supply connection portion configured to be detachably connected to a battery pack for supplying power to the drive motor; and
a controller electrically connected to at least the drive motor to control the drive motor to rotate;
wherein energy of the battery pack is greater than or equal to 40 Wh.

2. The electric wagon according to claim 1, wherein the power supply connection portion is provided with a coupling portion connected to the battery pack, and the coupling portion has basically a same structure as a coupling portion of a power tool adapted to the battery pack, and the coupling portion of the power tool is configured to be coupled to the battery pack.

3. The electric wagon according to claim 1, wherein the wagon body further comprises an enclosure detachably connected to the frame to form a storage space.

4. The electric wagon according to claim 3, wherein the battery pack is disposed at a front end, rear end, lower end, left side or right side of the storage space.

5. The electric wagon according to claim 3, wherein the frame is a rigid structural member, and the enclosure comprises a flexible structural member.

6. The electric wagon according to claim 1, further comprising a parameter detection module configured to detect a wagon parameter of the electric wagon, wherein the controller is configured to adjust an assistance state of the drive motor according to the wagon parameter.

7. The electric wagon according to claim 6, wherein the controller is configured to identify, according to the wagon parameter, an operation intention of a user operating the electric wagon and adjust the assistance state of the drive motor according to the operation intention.

8. The electric wagon according to claim 6, wherein the wagon parameter comprises an operating parameter of the drive motor, a state parameter of the handle device relative to the wagon body, a magnitude and direction of a force applied by a user to the handle device, or a walking speed of the user.

9. The electric wagon according to claim 6, wherein the assistance state comprises output torque of the drive motor or an output speed of the drive motor.

10. The electric wagon according to claim 1, wherein the drive motor is a hub motor.

11. The electric wagon according to claim 10, wherein an outer diameter of the hub motor is greater than or equal to 100 mm and less than or equal to 250 mm.

12. The electric wagon according to claim 1, further comprising a control board provided with at least the controller and disposed adjacent to the power supply connection portion.

13. The electric wagon according to claim 12, wherein the control board is provided with an energy recovery circuit; and the energy recovery circuit recovers electrical energy to charge the battery pack when the drive motor is decelerated.

14. The electric wagon according to claim 13, further comprising a parameter detection module configured to detect at least a walking state of the electric wagon; wherein the controller is configured to, when the walking state is a downhill state, control the energy recovery circuit to recover electrical energy.

15. The electric wagon according to claim 12, further comprising a mode selection switch disposed on the handle device and electrically connected to at least the controller, wherein the controller is configured to control, according to a switch state of the mode selection switch, the drive motor to operate.

16. An electric wagon, comprising:
a wagon body comprising at least a frame;
a handle device connected to the wagon body;
a walking assembly comprising at least driving wheels;
a drive motor configured to drive the driving wheels to rotate;
a power supply connection portion configured to be detachably connected to a battery pack for supplying power to at least the drive motor; and
a controller electrically connected to at least the drive motor to control the drive motor to rotate;
wherein the power supply connection portion is provided with a coupling portion connected to the battery pack, and the coupling portion has basically a same structure as a coupling portion of a power tool adapted to the battery pack, wherein the coupling portion of the power tool is configured to be coupled to the battery pack, so that after being detached from the wagon body, the battery pack is couplable to the power tool to supply power to the power tool.

17. An electric wagon, comprising:
a wagon body comprising at least a foldable frame;
a handle device connected to the wagon body;
a walking assembly comprising at least driving wheels;
a drive motor configured to drive the driving wheels to rotate;
a power supply connection portion configured to be detachably connected to a battery pack for supplying power to the drive motor; and
a controller electrically connected to at least the drive motor to control the drive motor to rotate.

18. The electric wagon according to claim 17, wherein the power supply connection portion is disposed on the handle device.

19. The electric wagon according to claim 17, wherein the wagon body further comprises an enclosure detachably connected to the frame to form a storage space.

20. The electric wagon according to claim 19, wherein the power supply connection portion is disposed at a front end, a rear end, a lower end, a left side or a right side of the storage space.

21. The electric wagon according to claim 19, wherein the frame is a rigid structural member, and the enclosure comprises a flexible structural member.

22. The electric wagon according to claim 17, wherein the power supply connection portion comprises at least two power interfaces arranged independently.

23. The electric wagon according to claim 22, wherein the at least two power interfaces arranged independently comprise at least a closed battery compartment.

24. The electric wagon according to claim 17, wherein the power supply connection portion further comprises an outdoor power supply connection terminal configured to be connected to an external power supply device.

25. The electric wagon according to claim 19, further comprising a power output interface connectable to an external powered device to output electrical energy, wherein the power output interface is disposed on the handle device or at a front end or rear end of the storage space.

26. The electric wagon according to claim 17, further comprising a control board provided with at least the controller and disposed adjacent to the power supply connection portion.

27. The electric wagon according to claim 26, wherein the control board is provided with an energy recovery circuit; and the energy recovery circuit recovers electrical energy to charge the battery pack when the drive motor is decelerated.

28. The electric wagon according to claim 17, wherein energy of the battery pack is greater than or equal to 40 Wh.

29. The electric wagon according to claim 17, further comprising a power display device disposed on the handle device or in an adjacent region around the power supply connection portion.

30. The electric wagon according to claim 17, further comprising a mode selection switch disposed on the handle device and electrically connected to at least the controller, wherein the controller is configured to control, according to a switch state of the mode selection switch, the drive motor to operate.

31. The electric wagon according to claim 30, wherein when the mode selection switch is in a first switch state, the drive motor does not operate; the mode selection switch in a second switch state has a plurality of switch gears; and the controller is configured to control, according to different switch gears, the drive motor to output power at corresponding output speeds or with corresponding output torque.

32. The electric wagon according to claim 30, further comprising a safety switch disposed on the handle device and electrically connected to at least the controller; wherein the controller is configured to, when the safety switch is turned on, not respond to a change in a switch state of the mode selection switch.

33. The electric wagon according to claim 17, wherein a ratio of a volume of the electric wagon when the frame is in a folded state to a volume of the electric wagon when the frame is in an unfolded state is greater than or equal to 0.1 and less than or equal to 0.6.

34. An electronically power assisted wagon, comprising:
a wagon body comprising at least a foldable frame;
a handle device connected to the wagon body;
a walking assembly comprising at least driving wheels;
a drive motor configured to drive the driving wheels to rotate;
a power supply connection portion configured to be connected to a power supply for supplying power to at least the drive motor; and
a controller electrically connected to at least the drive motor to control the drive motor to rotate;
wherein the electronically power assisted wagon further comprises:
a parameter detection module configured to sense an operating force applied to the handle device;
the electronically power assisted wagon comprises an assistance mode; and
the controller is configured to, in the assistance mode, control an assistance state of the drive motor for the driving wheels according to the operating force.

35. The electronically power assisted wagon according to claim 34, wherein the parameter detection module is disposed on the handle device or at a connection between the handle device and the wagon body.

36. The electronically power assisted wagon according to claim 34, further comprising a control board provided with at least the controller; wherein the control board is provided with an energy recovery circuit; the power supply comprises a battery pack whose energy is greater than or equal to 40 Wh; and the energy recovery circuit recovers electrical energy to charge the battery pack when the drive motor is decelerated.

37. The electronically power assisted wagon according to claim 34, wherein the parameter detection module is further configured to detect a walking state of the electronically power assisted wagon; and the controller is configured to, when the walking state is a downhill state, control the drive motor to change the assistance state to reduce a rotational speed of the drive motor.

38. The electronically power assisted wagon according to claim 34, further comprising a mode selection switch disposed on the handle device, electrically connected to at least the controller, and configured to control an operating mode of the electronically power assisted wagon.

39. The electronically power assisted wagon according to claim 38, wherein when the mode selection switch is in an on state, the electronically power assisted wagon is in an assisted mode, and the controller is configured to control the drive motor to provide assistance; and when the mode selection switch is in an off state, the electronically power assisted wagon is in a non-assisted mode, and the controller is configured to control the drive motor to stop assistance.

40. The electronically power assisted wagon according to claim 38, wherein when the mode selection switch is in a first switch state, the drive motor does not operate; the mode selection switch in a second switch state has a plurality of switch gears; and the controller is configured to control, according to different switch gears, the drive motor to output power at corresponding output speeds or with corresponding output torque.

41. The electronically power assisted wagon according to claim 38, further comprising a safety switch disposed on the handle device and electrically connected to at least the controller; wherein the controller is configured to, when the safety switch is turned on, not respond to a change in a switch state of the mode selection switch.

42. An electronically power assisted wagon, comprising:
a wagon body comprising at least a foldable frame;
a handle device connected to the wagon body;
a walking assembly comprising at least driving wheels;
a drive motor configured to drive the driving wheels to rotate;
a power supply connection portion configured to be connected to a battery pack for supplying power to the drive motor; and
a controller electrically connected to at least the drive motor to control the drive motor to rotate;
wherein the electronically power assisted wagon further comprises:
a mode selection switch having at least a first switch state and a second switch state; and
the controller is configured to control, according to a switch state of the mode selection switch, the drive motor to provide assistance or not.

43. The electronically power assisted wagon according to claim 42, wherein the wagon body further comprises an enclosure detachably connected to the foldable frame to form a storage space; and the power supply connection portion is disposed at a front end, a rear end, a lower end, a left side or a right side of the storage space or disposed on the handle device.

44. The electronically power assisted wagon according to claim 42, wherein the power supply connection portion is configured to be detachably connected to the battery pack or an external power supply device.

45. The electronically power assisted wagon according to claim 42, wherein the power supply connection portion comprises at least a closed battery compartment or an outdoor power supply connection terminal.

46. The electronically power assisted wagon according to claim 45, wherein the drive motor is a hub motor.

47. The electronically power assisted wagon according to claim 42, further comprising a control board provided with at least the controller; wherein the control board is provided with an energy recovery circuit; and the energy recovery circuit recovers electrical energy to charge the battery pack when the drive motor is decelerated.

48. The electronically power assisted wagon according to claim 42, further comprising a safety switch disposed on the handle device and electrically connected to at least the controller; wherein the controller is configured to, when the safety switch is turned on, not respond to a change in the switch state of the mode selection switch.

49. The electronically power assisted wagon according to claim 42, further comprising a parameter detection module configured to detect a wagon parameter of the electronically power assisted wagon; wherein the controller is configured to adaptively adjust an assistance state of the drive motor according to the wagon parameter.

50. The electronically power assisted wagon according to claim 49, wherein the controller is configured to identify, according to the wagon parameter, an operation intention of a user operating the electronically power assisted wagon and adjust the assistance state of the drive motor according to the operation intention.

51. The electronically power assisted wagon according to claim 49, wherein the wagon parameter comprises an operating parameter of the drive motor, a state parameter of the handle device relative to the wagon body, a magnitude and direction of a force applied by a user to the handle device, or a walking speed of the user.

52. The electronically power assisted wagon according to claim 49, wherein the assistance state comprises output torque of the drive motor or an output speed of the drive motor.

53. An electronically power assisted wagon, comprising:
a wagon body comprising at least a foldable frame;
a handle device connected to the wagon body;
a walking assembly comprising at least driving wheels;
a drive motor configured to drive the driving wheels to rotate;
a power supply connection portion configured to be connected to a battery pack for supplying power to the drive motor; and
a controller electrically connected to at least the drive motor to control the drive motor to rotate;
wherein the electronically power assisted wagon further comprises:
a parameter detection module configured to detect a wagon parameter of the electric wagon; and
the controller is configured to adjust an assistance state of the drive motor according to the wagon parameter.

54. The electronically power assisted wagon according to claim 53, wherein the controller is configured to identify, according to the wagon parameter, an operation intention of a user operating the electronically power assisted wagon and adjust the assistance state of the drive motor according to the operation intention.

55. The electronically power assisted wagon according to claim 53, wherein the wagon parameter comprises an operating parameter of the drive motor, a state parameter of the handle device relative to the wagon body, a magnitude and direction of a force applied by a user to the handle device, or a walking speed of the user.

56. The electronically power assisted wagon according to claim 53, wherein the assistance state comprises output torque of the drive motor or an output speed of the drive motor.

57. An electric wagon, comprising:
a wagon body comprising at least a frame;
a handle device connected to the wagon body; and
a walking assembly comprising at least driving wheels;
wherein the frame is configured to be foldable; and
the electric wagon further comprises:
a drive motor integrated into the driving wheels to drive the driving wheels to rotate;
a power supply connection portion configured to be connected to a power supply for supplying power to the drive motor; and
a controller electrically connected to at least the drive motor to control the drive motor to rotate.

58. The electric wagon according to claim 57, wherein
the drive motor has a length greater than or equal to 100 mm and less than or equal to 250 mm along a radial direction of the driving wheels.

59. The electric wagon according to claim 57, wherein a ratio of a volume of the electric wagon when the frame is in a folded state to a volume of the electric wagon when the frame is in an unfolded state is greater than or equal to 0.1 and less than or equal to 0.6.

60. The electric wagon according to claim 57, wherein the handle device is configured to be foldable relative to the wagon body.

61. The electric wagon according to claim 57, further comprising a parameter detection module configured to detect a wagon parameter of the electric wagon, wherein the controller is configured to adjust an assistance state of the drive motor according to the wagon parameter.

62. The electric wagon according to claim 61, wherein the controller is configured to identify, according to the wagon parameter, an operation intention of a user operating the electric wagon and adjust the assistance state of the drive motor according to the operation intention.

63. The electric wagon according to claim 61, wherein the wagon parameter comprises an operating parameter of the drive motor, a state parameter of the handle device relative to the wagon body, a magnitude and direction of a force applied by a user to the handle device, or a walking speed of the user.

64. The electric wagon according to claim 61, wherein the assistance state comprises output torque of the drive motor or an output speed of the drive motor.

65. An electric wagon, comprising:
a wagon body comprising at least a frame;
a handle device connected to the wagon body; and
a walking assembly comprising at least driving wheels;
wherein the electric wagon further comprises:
a drive motor integrated into the driving wheels to drive the driving wheels to rotate;
a power supply connection portion configured to be connected to a power supply for supplying power to the drive motor; and
a controller electrically connected to at least the drive motor to control the drive motor to rotate;
wherein rated output power of the drive motor is greater than or equal to 100 W and less than or equal to 800 W.

66. The electric wagon according to claim 65, wherein the power supply connection portion comprises at least two power interfaces arranged independently.

67. The electric wagon according to claim 66, wherein the at least two power interfaces arranged independently comprise at least a closed battery compartment.

68. The electric wagon according to claim 65, wherein the drive motor has a length greater than or equal to 100 mm and less than or equal to 250 mm along a radial direction of the driving wheels.

69. The electric wagon according to claim 65, wherein the frame is configured to be foldable, and a ratio of a volume of the electric wagon when the frame is in a folded state to a volume of the electric wagon when the frame is in an unfolded state is greater than or equal to 0.1 and less than or equal to 0.6.

70. The electric wagon according to claim 65, further comprising a parameter detection module configured to detect a wagon parameter of the electric wagon; wherein the controller is configured to adjust an assistance state of the drive motor according to the wagon parameter.

71. The electric wagon according to claim 70, wherein the controller is configured to identify, according to the wagon parameter, an operation intention of a user operating the electric wagon and adjust the assistance state of the drive motor according to the operation intention.

72. The electric wagon according to claim 70, wherein the wagon parameter comprises an operating parameter of the drive motor, a state parameter of the handle device relative to the wagon body, a magnitude and direction of a force applied by a user to the handle device, or a walking speed of the user.

73. The electric wagon according to claim 70, wherein the assistance state comprises output torque of the drive motor or an output speed of the drive motor.

74. An electric wagon, comprising:
a wagon body comprising at least a foldable frame;
a handle device connected to the wagon body; and
a walking assembly comprising at least driving wheels;
wherein the electric wagon further comprises:
a drive motor configured to drive the driving wheels to rotate;
a power supply connection portion configured to be detachably connected to a battery pack for supplying power to the drive motor;
a controller electrically connected to at least the drive motor to control the drive motor to rotate; and
a transmission mechanism configured to connect the drive motor to at least one of the driving wheels, wherein the transmission mechanism comprises a differential assembly configured to cause the driving wheels driven to rotate by the drive motor to travel at different speeds.

75. The electric wagon according to claim 74, wherein the walking assembly further comprises driven wheels disposed away from the drive motor.

76. The electric wagon according to claim 74, wherein the driving wheels are driven by the drive motor to rotate around a central axis, the drive motor is connected to the driving wheels via a coupling assembly, and an axis of the coupling assembly is eccentric relative to the central axis.

77. The electric wagon according to claim 76, wherein the driving wheels are configured to be a rear wheel group of the walking assembly, and the coupling assembly connects the driving wheels on left and right sides.

78. The electric wagon according to claim 76, wherein the transmission mechanism further comprises a reduction assembly, the reduction assembly comprises at least one stage of gear reduction transmission, reduction gears are provided on the coupling assembly, and gear structures meshing with the reduction gears are provided in the driving wheels.

79. The electric wagon according to claim 78, wherein the drive motor is connected to the differential assembly via at least one stage of gear reduction transmission in the reduction assembly.

80. The electric wagon according to claim 74, wherein the differential assembly is configured to cause the driving wheels to travel at different speeds during forward and reverse rotation of the driving wheels.

81. The electric wagon according to claim 74, further comprising a clutch mechanism, wherein when the clutch mechanism is in a first state, power transmission between the drive motor and the driving wheels is cut off.

82. The electric wagon according to claim 81, wherein the clutch mechanism is mechanically coupled to the drive motor and the driving wheels.

83. The electric wagon according to claim 81, wherein when the clutch mechanism is in a second state, the power transmission between the drive motor and the driving wheels is enabled, and the controller adjusts an assistance state of the drive motor according to a wagon parameter.

84. The electric wagon according to claim 83, further comprising a parameter detection module configured to detect the wagon parameter of the electric wagon, wherein the controller is configured to adjust the assistance state of the drive motor according to the wagon parameter.

85. The electric wagon according to claim 84, wherein the controller is configured to identify, according to the wagon parameter, an operation intention of a user operating the electric wagon and adjust the assistance state of the drive motor according to the operation intention.

86. The electric wagon according to claim 84, wherein the wagon parameter comprises an operating parameter of the drive motor, a state parameter of the handle device relative to the wagon body, a magnitude and direction of a force applied by a user to the handle device, or a walking speed of the user.

87. The electric wagon according to claim 83, wherein the assistance state comprises output torque of the drive motor or an output speed of the drive motor.
